Europäisches Patentamt

European Patent Office

Office européen des brevets

(11) Veröffentlichungsnummer: **0 444 472 A2**

## (12) EUROPÄISCHE PATENTANMELDUNG

(21) Anmeldenummer: 91101981.8

(22) Anmeldetag: **13.02.91**

(51) Int. Cl.5: **F16H 61/00**, F16H 47/04

(30) Priorität: 13.02.90 DE 4004314
09.03.90 DE 4007531
12.10.90 DE 4032408
13.12.90 DE 4039823

(43) Veröffentlichungstag der Anmeldung:
04.09.91 Patentblatt 91/36

(84) Benannte Vertragsstaaten:
**DE FR GB IT**

(71) Anmelder: **Meyerle, Michael**
**Kiefernweg 9**
**W-7996 Meckenbeuren(DE)**

(72) Erfinder: **Meyerle, Michael**
**Kiefernweg 9**
**W-7996 Meckenbeuren(DE)**

(54) **Schalteinrichtung, insbesondere für Kraftfahrzeuggetriebe.**

(57) Die Erfindung betrifft eine Schalteinrichtung für automatisch schaltbare Kraftfahrzeuggetriebe, insbesondere für stufenlose Getriebe mit Leistungsverzweigung zum Schalten mehrerer Schaltbereiche. Die Kupplungen sind als formschlüssige, form- plus kraftschlüssige oder/und als Reibkupplungen ausgebildet, die im Sychronbereich der zu schaltenden Kupplungsglieder schaltbar sind. Zwei Kupplungseinheiten bilden jeweils eine Funktionseinheit, die in Abhängigkeit verschiedener Betriebsparameter ein Signal zum automatischen Schließen der einen und zum öffnen der anderen Kupplung erhalten. Die Kupplungsverzahnung ist verschiedenartig ausgebildet.

Die Erfindung betrifft eine Schalteinrichtung zum Schalten mehrerer Fahrbereiche bei stufenlosen Getrieben oder Stufengetrieben nach einer in dem Oberbegriff der Ansprüche 1 bis 4 aufgeführten Art. Insbesondere bei stufenlosen Verzweigungsgetrieben, die mit formschlüssigen oder form- plus kraftschlüssigen Kupplungseinheiten ausgerüstet sind, ist eine spezielle Steuerungsart der Bereichskupplungen notwendig, um hohe Schaltqualität ohne Lastunterbrechung zu erzielen. Auch bei Anwendung einer Reibkupplung in Form einer Konuskupplung ist es vorteilhaft, einen gezielten angepaßten Schaltablauf mit entsprechender Hydrostatführung innerhalb der Schaltphase zu realisieren.

Bei stufenlosen hydrostatisch-mechanischen Verzweigungsgetrieben ist es üblich, daß nach jedem Bereichswechsel bzw. nach jeder Bereichsschaltung sich die Hydrostateinheiten A und B in ihrer Funktion als Pumpe und Motor vertauschen. Der lastabhängige Drehzahlschlupf des Hydrostatgetriebes bzw. der mit der Hydrostateinheit B verbundenen Welle 5 hat nach jeder Bereichsschaltung umgekehrte Auswirkung, die durch die Verstelleinrichtung innerhalb der Schaltphase korregiert werden muß, um eine ruckfreie Schaltung zu gewährleisten.

Aufgabe der Erfindung ist es, eine Schalteinrichtung, bevorzugt für automatisch schaltbare Getriebe, insbesondere für stufenlose Verzweigungsgetriebe mit rein formschlüssigen oder form- plus kraftschlüssig wirkenden Kupplungen, wie aus DE 39 03 010 bekannt, oder Reibkupplungen mit Konus-Reibflächen zu schaffen, die hohe Schaltqualität ohne Lastunterbrechung gewährleistet.

Diese Aufgabe wird durch die in den Hauptansprüchen 1 bis 5,20 und 25 aufgeführten Merkmale gelöst. Weitere vorteilhafte Ausgestaltungen gehen aus den Unteransprüchen und der Beschreibung hervor.

Die Erfindung wird anhand von Zeichnungen erläutert. Es zeigen:

| | |
|---|---|
| Figur 1 | ein Schaltschema; |
| Figur 1a | ein weiteres Schaltschema; |
| Figur 2 | die Verstell- und Drehzahlcharakteristik über einem Schaltablauf; |
| Figur 2a | Druckverlauf des Hydrostatgetriebes und Drehmomentverlauf zweier Kupplungen innerhalb eines Schaltablaufes; |
| Figur 2b | Schaltschema einer hydraulisch-mechanischen Teileinrichtung bezogen auf den Öffnungsvorgang einer geschalteten Bereichskupplung; |
| Figur 3 | eine form- plus kraftschlüssige oder rein formschlüssige Kupplungseinrichtung als Doppelkupplung. |
| Fig. 3a | eine Ausführungsform des Kupplungsprofils; |
| Fig. 3b | eine Kupplungsausführung, bei der der Kupplungsring und der Kolben getrennte Bauteile darstellen; |
| Fig. 3c | eine weitere Ausführungsform einer Kupplung mit hydraulischer Rückführung des Druckkolbens; |
| Fig. 3d und 3e | eine weitere Ausführungsform des Kupplungsprofils; |
| Fig. 4 und 5 | eine Schaltkupplung mit Synchronisiereinrichtung; |
| Fig. 6 und 6a | eine Kupplungsausführung als Reibkupplung mit konischen Reibflächen, ausgeführt als Doppelkupplung. |
| Fig. 6b | eine Reibkupplung mit zusätzlicher Schaltverzahnung; |
| Fig. 7 bis 7c | verschiedene Ausführungsformen des Kupplungsprofils mit axialer drehmomentabhängiger Kraftkomponente durch schräge Mitnahmeflächen |

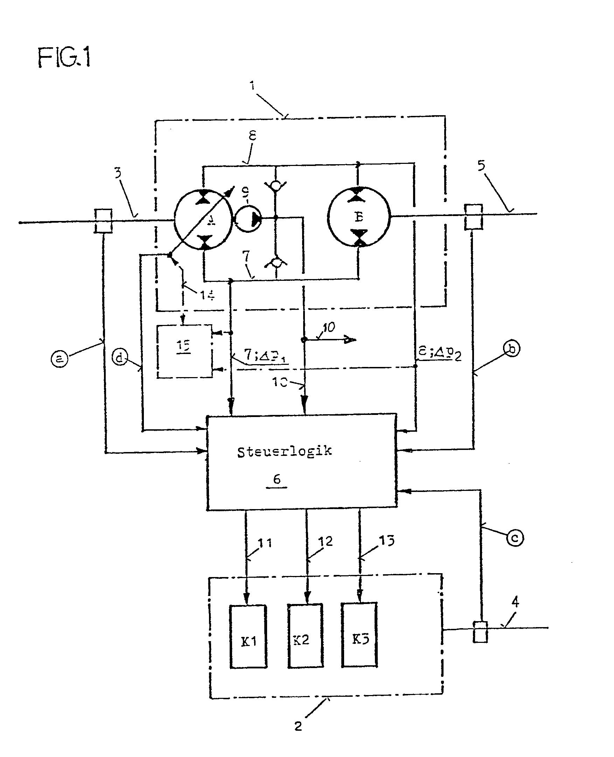

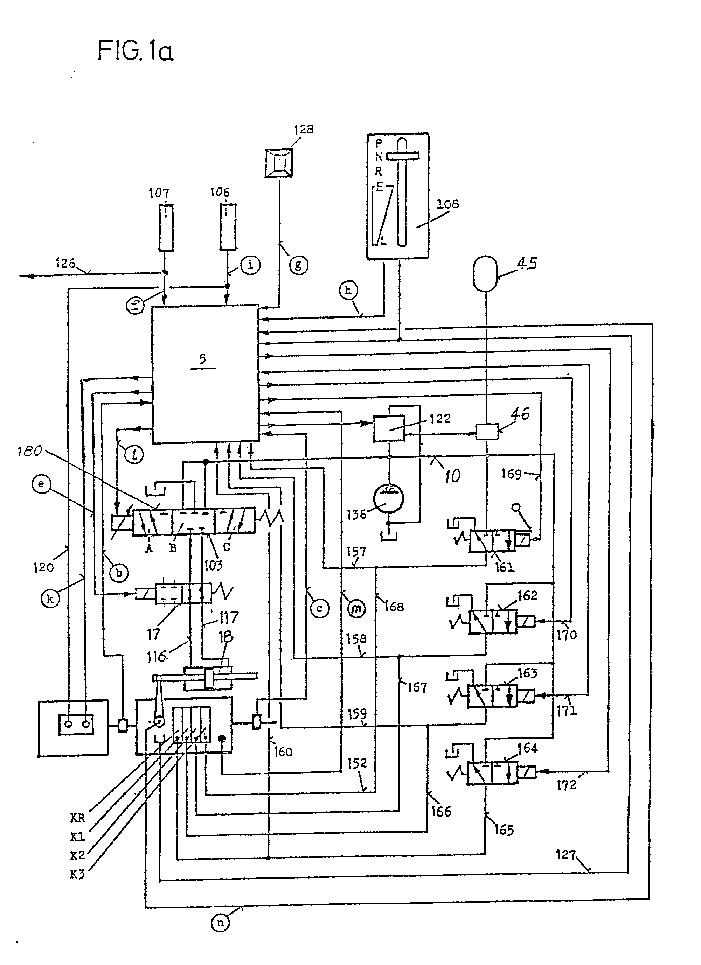

In Figur 1 ist das Hydrostatgetriebe mit 1 gekennzeichnet, der mechanische Getriebeteil, der die Bereichskupplungen K1, K2, K3 mit den Steuerleitungen 11, 12, 13 enthält, mit 2 und das Steuergerät bzw. die Steuerlogik mit 6 gekennzeichnet. Das Hydrostatgetriebe 1 und der mechanische Getriebeteil sind zum Beispiel über Planetengetriebeeinheiten, Wellen und Zahnräder in nicht dargestellter Weise nach bekannter Art miteinander verbunden.

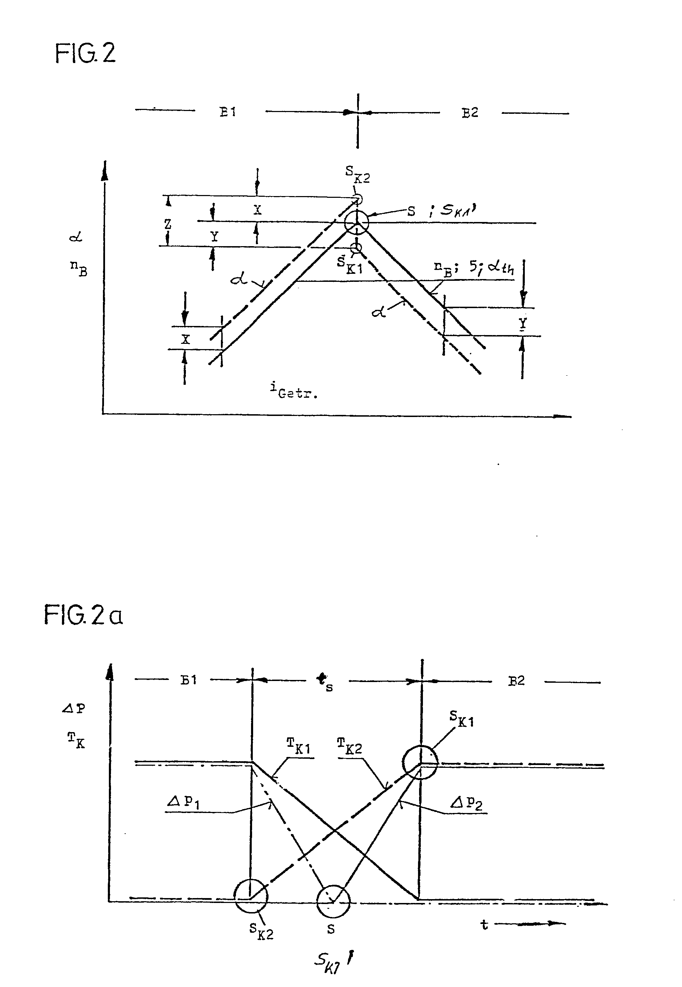

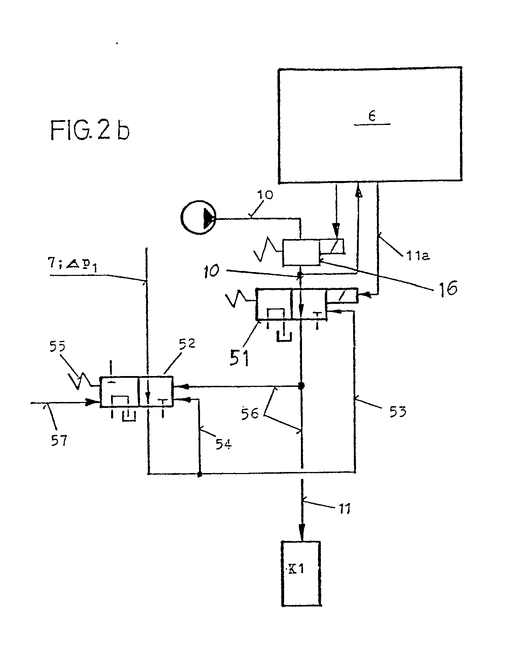

Die Leckö/verluste des Hydrostatgetriebes bewirken einen zwangsläufigen Drehzahlschlupf einer Hydrostatwelle 5. Dieser Drehzahlschlupf wirkt sich in Verbindung mit einem stufenlosen Leistungsverzweigungsgetriebe mit mehreren Fahrbereichen innerhalb der Bereichsschaltung, wie in Figur 2 dargestellt, so aus, daß zum Beispiel bei Zugbetrieb zum Erreichen des Synchronzustandes der zu schaltenden Kupplungsglieder die Verstellgröße um das Maß X am Schaltpunkt größer sein muß als der theoretische Wert, un am Schaltpunkt S den Synchronpunkt der zu schaltenden Kupplungsglieder zu erreichen. Aufgrund der erwähnten Funktionsumkehrung von Pumpe zu Motor und umgekehrt nach erfolgter Schaltung in den nächsten Schaltbereich, wirkt sich der Drehzahlschlupf ebenfalls umgekehrt aus, was einer Verstellkorrekturgröße um das Maß Y entspricht. In der Regel haben die Korrekturgrößen X und Y unterschiedliche Größen, bedingt durch die jeweilige Getriebeauslegung und Bereichsgrößen. Innerhalb der Schaltphase ist das Hydrostatgetriebe in seiner Verstellung in Abhängigkeit zum Lastzustand um das Korrekturmaß X und Y zu korrigieren. Nach einem, wie in Figur 2 dargestellten Schaltbeispiel, wobei B1 Bereich 1 und B2 Bereich 2

EP 0 444 472 A2

bedeutet, ist der Funktionsablauf wie folgt:

Bei einer Hochschaltung unter Last von B1 in B2 wird das Schaltsignal zum Schließen der Zweiten Bereichskupplung ausgelöst sobald die Welle 5 bzw. die mit ihr verbundenen Kupplungsglieder mit den zu schaltenden Kupplungsgliedern am Schaltpunkt S Synchronlauf erreicht erreicht haben. Die Hydrostatverstellung ist hierbei um das Maß X größer als der theoretische Wert. Nun erfolgt die Schaltung in den zweiten Bereich bzw. das Schließen der zweiten Bereichskupplung nach erfolgtem Synchronimpuls, wobei die erste Bereichskupplung geschlossen bleibt. Die Hydrostatverstellung wird nun um das Maß Z zurückgeregelt innerhalb beider geschlossener Kupplungen bis der Stellpunkt SK1 erreicht ist, wonach das Signal zum Öffnen der ersten Bereichskupplung erfolgt. Erst danach wird die Getriebeübersetzung bei weiterer Hydrostatverstellung weiter verändert, um den zweiten Bereich zu durchfahren.

Im Hinblick auf eine optimal kurze Schaltzeit wird die Hydrostatverstellrichtung unmittelbar nach geschlossener zweiter Bereichskupplung in die Gegenrichtung umgesteuert. Dies kanh auf elektronischem Weg in der Steuerlogik programmiert oder durch ein entsprechendes, nicht dargestelltes Wechselventil, das zum Beispiel in Abhängigkeit des Steuerdruckes pK2 für die zweite Bereichskupplung umgesteuert wird.

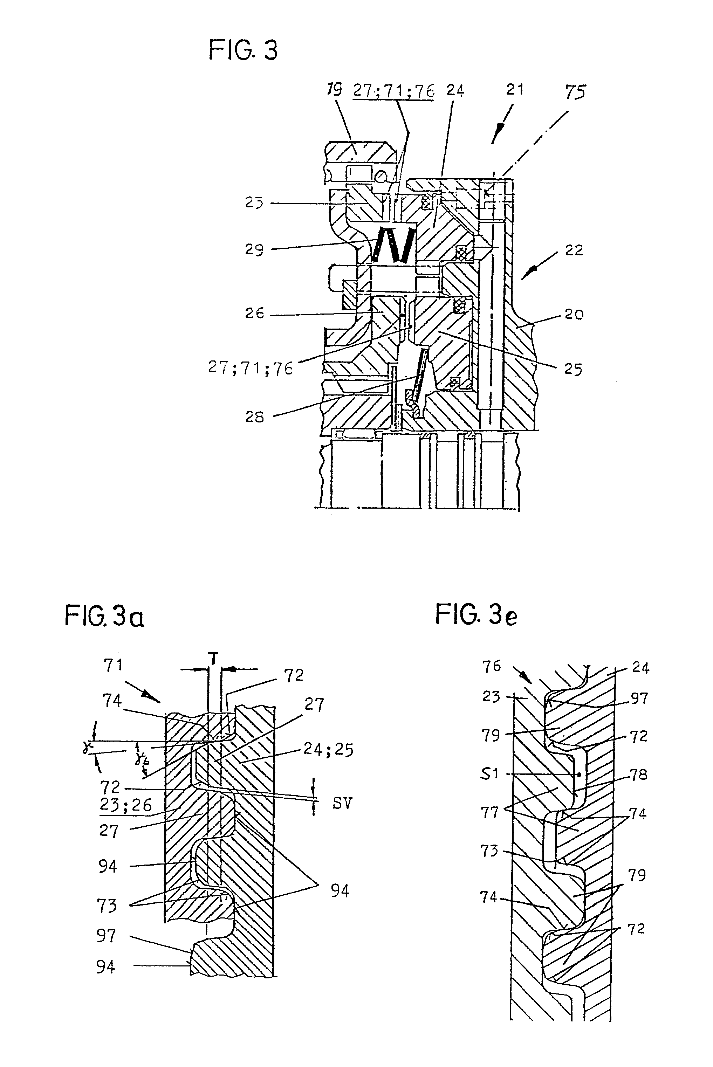

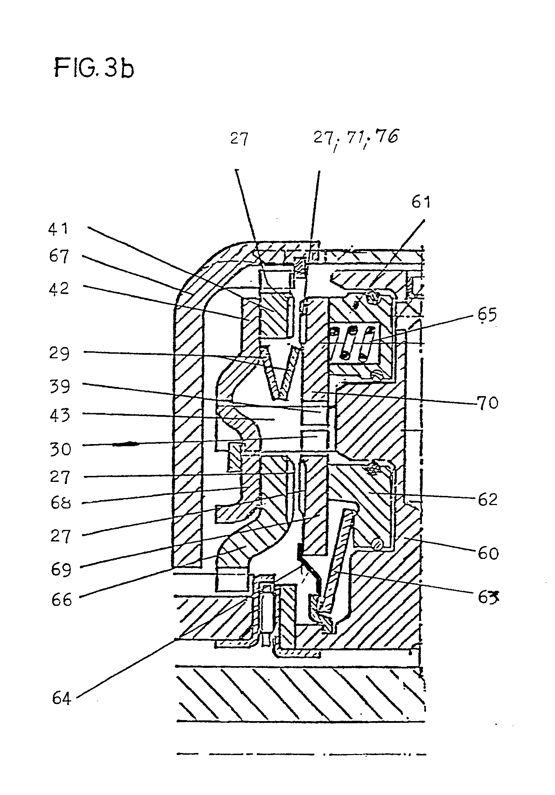

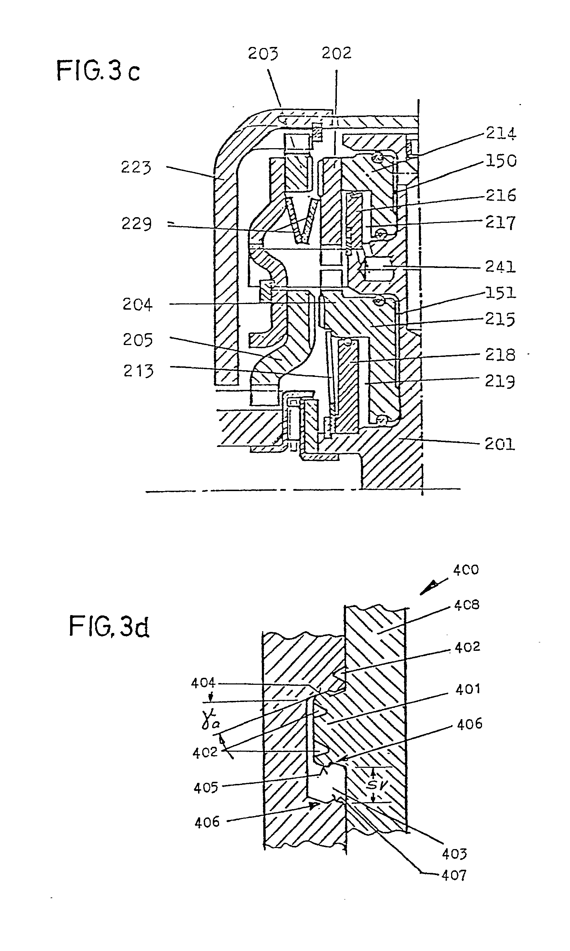

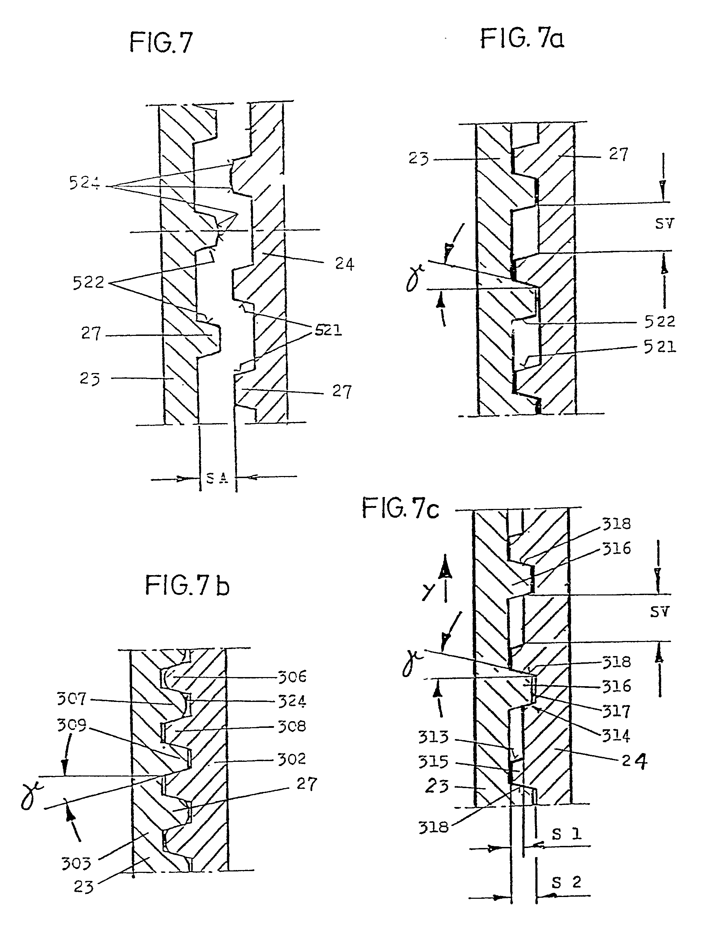

Die in Fig. 3 dargestellte Kupplung entspricht der Kupplungsausführung wie aus DE 39 03 010 bekannt und im Oberbegriff des Anspruches 1 beschrieben. Sie besitzt eine Kupplungsverzahnung 27, die axiale Abweisflächen, wie in Figur 7 bis 7c dargestellt, aufweist, so daß abhängig vom Drehmoment eine axiale Kraftkomponente zum Ausschalten der Kupplung erzeugt wird, sobald die Kupplung 21 bzw. 25 durch das Ausschaltsignal bzw. Öffnungssignal drucklos gesetzt wird. Im eingeschalteten Zustand ist das Getriebeglied 19 über den Kupplungsring 23 und die Kupplungsverzahnung 27 mit dem mit dem Kupplungsträger 20 drehfesten und axial verschiebbaren Kupplungsglied 24, das gleichzeitig den Druckkolben darstellt unter Druckbeaufschlagung mit dem Kupplungsträger 20, der gleichzeitig die Abtriebswelle bildet, verbunden. Die Kupplung 22 ist hier vorzugsweise z.B. als zweite Bereichskupplung geöffnet und somit lastlos.

Das Kupplungsprofil 27 ist auch gemäß der Erfindung sehr vorteilhaft als formschlüssige Kupplungsverzahnung, wie in Fig.3a und 3d dargestellt und später genauer beschrieben, ausführbar. Der in Anspruch 1 beschriebene Kupplungsträger ist in der Regel als rotierendes Bauteil oder nichtrotierendes Bauteil bei Verbindung eines Getriebeteiles (z.B. Hohlrad eines Planetengetriebes) beispielsweise mit dem Gehäuse, ausführbar (nicht dargestellt).

Gemäß der Erfindung ist ein Druckventil 16; 122 vorgesehen, das nach Erreichen des Synchronzustandes an der neuen Kupplung über ein Synchronsignal e oder davon abhängiges Signal angesteuert wird, so daß der Steuerdruck für die neue zu schaltende Kupplung spontan angehoben wird, um diese Kupplung schnellstmöglichst zu schließen. Dieser Druckaufbau, der auch in Form eines Druckstoßes wirken kann, ermöglicht auch das Kupplungsschließen trotz gewisser Synchronabweichungen bzw. des Drehmomentaufbaues während dem Schließvorgang der Kupplung.

Desweiteren sieht die Erfindung ein Sperrventil 17 vor, das den Zufluß zum Verstellservo 4; 18 sperrt bzw. die Verstelleinrichtung des stufenlosen Wandlers nach Erreichen des Synchronzustandes der neuen Kupplung solange blockiert, bis die neue Kupplung geschlossen ist. Dieses Sperrventil 17 bzw. diese Sperreinrichtung kann auch durch das Synchronsignal e angesteuert werden wie auch das entsprechende Kupplungsventil 161; 162, 163, 164 der neuen Kupplung (Fig. 1a). Diese Sperreinrichtung 17 verhindert nach erreichtem Synchronlauf und eingeleitetem Schaltimpuls ein mögliches Verlassen des Synchronzustandes bevor die neue Kupplung geschlossen ist. Nach geschlossener Kupplung wird die Sperrfunktion der Verstelleinrichtung durch Lösen des Sperrventils 17 sofort aufgehoben, damit die bereits beschriebene Verstellkorrektur (x, y; z) eingeleitet und abgeschlossen werden kann innerhalb beider geschlossener Kupplungen. Das Signal zur Aufhebung der Sperrfunktion kann durch das Drucksignal 157; 158; 159 aus dem sich aufbauenden Steuerdruck der neuen Kupplung ausgelöst werden. Auch eine einprogrammierte feste oder von anderen Betriebsgrößen abhängige Sperrzeit kann in manchen Anwendungsfällen ausreichend sein. Die Betriebsgrößen können Motordrehzahl, Temperatur, Gaspedalstellung, Drosselklappenstellung, Hydrostatdruck, Änderungsgeschwindigkeit der Verstellung und vorallem die Fördermenge der Speisepumpe sein. In der Größe der Sperrzeit ist in erster Linie die Befüllungszeit der Druckkolben der neuen Kupplung zu berücksichtigen, die abhängig von einer oder mehreren der vorgenannten Betriebsgrößen unterschiedlich sein kann. Die Sperreinrichtung für die Verstellung kann vorzugsweise auoh in der Elektronik einprogrammiert oder in einem hydraulischen oder/und mechanischen Gerät, z.B. einem bekannten Dämpfungsventil festgelegt werden, wobei als Steuersignale die oben beschriebenen Signale dienen können. Die Sperrfunktion wird hierbei durch ein entsprechendes Ventil 170, das die Hydrostatverstellung regelt, realisiert. Auch ein zwischen den Zuflußleitungen 116, 117 zur Hydrostatverstellung geschaltetes Wechselventil 44, das über Steuersignale der alten und neuen Kupplung oder dem Synchronsignal e angesteuert wird, ist als Sperrventil geeignet (nicht dargestellt).

Das Druckventil 16; 122 kann ein Zweistufenventil sein, d. h. mit zwei Druckstufen, wobei die niedrigere

3

Druckstufe für den Normalbetrieb und die hohe Druckstufe zum Schalten der neuen Kupplung kurzzeitig angesteuert wird. Das Synchronsignal e kann gleichzeitig auch zum Ansteuern der zweiten Druckstufe benutzt werden.

Zur Wirkungsgradoptimierung ist in einem weiteren Ausführungsbeispiel bevorzugt die erste Druckstufe lastabhängig, z. B. durch den Arbeitsdruck $\Delta p1$ bzw. $\Delta p2$ veränderbar bzw. modulierbar wie an anderer Stelle genauer beschrieben wird. Für ausreichende Ölmenge für die zweite Druckstufe sorgt erfindungsgemäß ein alternativ vorgesehener Hydrospeicher 45, der immer mit dem höheren Druck der zweiten Druckstufe nach einem Schaltvorgang aufgefüllt wird. Ein Ventil 46 verschließt den Ausgang des Hydrospeichers 45, so daß der Druck bis zur nächsten Schaltung aufrechterhalten bleibt. Mit Ansteuerung der neuen Kupplung wird auch dieses Ventil angesteuert und geöffnet. Bei Druckabfall außerhalb der Schaltung wird der Hydrospeicher nachgefüllt, indem durch ein entsprechendes Druckabfallsignal das Hauptdruckventil 16; 122 auf die zweite bzw. hohe Druckstufe angesteuert wird, wodurch der Hydrospeicher 45 bei gleichzeitig geöffnetem Ventil 46 aufgefüllt wird. Dieser Hydrospeicher 45 ist bevorzugt für Getriebe mit lastabhängiger oder/und drehzahlabhängiger Druckmodulierung oder/und bei Getrieben mit kleiner Speise- bzw. Versorgungspumpe aus Wirkungsgradgründen anwendbar. Der Hydrospeicher 45 kann auch zur Steigerung der Verstellgeschwindigkeit dienen, um insbesondere die hohe Rückstellforderung, z. B. bei einem PKW-Getriebe in einem extremen Beschleunigungsvorgang oder auch beim Bremsvorgang zu erfüllen. Der Hydrospeicher wird immer dann dazugeschaltet, mit den bekannten Mitteln, wenn die Speisepumpe eine ausreichende Versorgung nicht aufrechterhalten kann, um die genannten kurzzeitigen Spitzenanforderungen zu erfüllen.

Bei einer elektronischen Steuereinrichtung kann z.B. ein Potensiometer die Druckgröße $\Delta p$ signalisieren und den Verstellwinkel $\alpha$ dem druckabhängigen Leckö/verlust bzw. dem Drehzahlschlupf anpassen und dementsprechend den Schaltpunkt $S_{K2}$ gegen-über dem theoretischen Schaltpunkt S um das entsprechende Korrekturmaß X verschieben.

In einer weiteren Ausführungsform für die Schaltkorrekturgröße kann auch ein auf ein Wechselventil oder Sperrventil 17 einwirkender Korrekturmechanismus verwendet werden, der in Abhängigkeit zu dem jeweiligen Lastzustand den Einschaltpunkt für die Folgekupplung lastabhängig bestimmt, z.B. durch das Hydrostatdrucksignal und ein Stellungssignal der Hydrostatverstellung. Die Sperrstellung bewirkt spontan eine Blockierung der Hydrostatverstellung bis die neue Kupplung geschlossen ist.

Bei einer elektrischen bzw. elektronischen Hydrostatverstellung, z.B. durch ein Potentiometer, kann die Verstellspannung durch die lastabhängige Korrektur-Spannung übersteuert bzw. überlagert werden. Die effektive Verstellspannungsgröße entspricht der Verstellgröße des Hydrostaten bzw. dem Verstellwinkel $\alpha$, der in der Schaltphase lastabhängig durch die vorgenannten Korrekturgrößen X und Y, wie in Fig. 2 dargestellt, korrigiert wird.

Zum Erreichen des Synchronzustandes der zu schaltenden Kupplungsglieder im Schaltpunkt, kann ein in der Steuerlogik verwendeter Drehzahlvergleich zweier oder mehrerer Getriebeglieder, zum Beispiel der Vergleich eines Antriebsdrehzahlsignals a mit einem Abtriebsdrehzahlsignal c, verwendet werden, um das Synchronsignal und damit verbundene Steuersignal zum Schließen der entsprechenden Kupplung K1 bzw. K2 bzw. K3 zu signalisieren. Auch ein mit einem Verstellorgan verbundenes Verstellsignal d ist als Steuersignal für die Kupplungsansteuerung geeignet, wobei eine entsprechende Verstellgröße den Synchronpunkt der betreffenden Kupplungsglieder signalisiert und in Abhängigkeit, Zum Beispiel durch ein lastabhängiges Signal aus dem Arbeitsdruck 7; $\Delta p1$ des Hydrostatgetriebes 1 eine dem Drehzahlschlupf entsprechende Verstellkorrektur im Steuergerät bzw. in der Steuerlogik berücksichtigt wird. Das Drucksignal $\Delta p1$ bewirkt eine leckölbedingte Korrektur des Verstellorganes.

In Figur 2 ist anhand eines Diagrammes das charakteristische Verhalten der Hydrostatverstellung - Verstelleinheit A - in Bezug auf die Hydrostatdrehzahl $n_B$ der Hydrostateinheit B im Lastzustand, z.B. als Zughochschaltung über einen Bereichswechsel B1/B2, dargestellt.

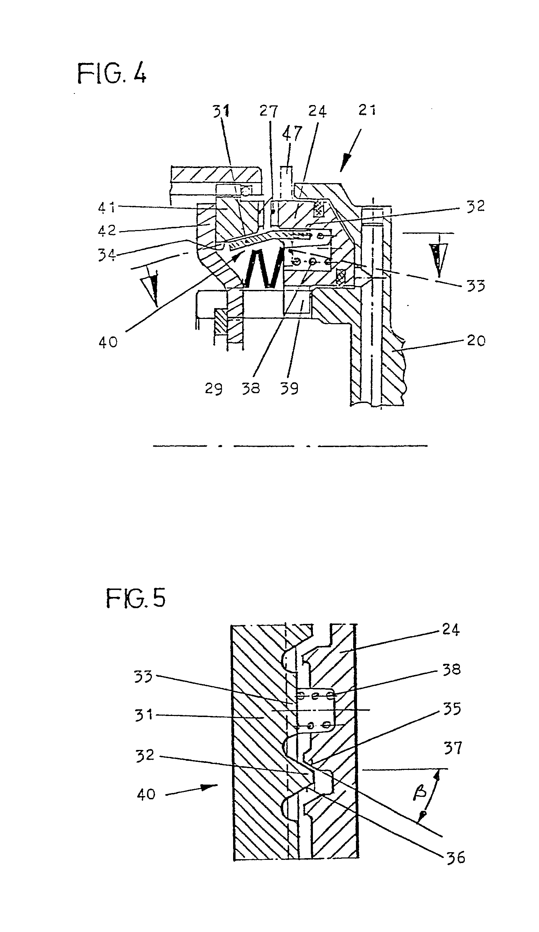

Die Korrektur der Verstellgröße X des Verstellwinkels $\alpha$ resultiert aus einem Belastungszustand, der zum Beispiel bei einer Zughochschaltung von einem ersten Bereich B1 in einen zweiten Bereich B2 auftritt. Diese Korrekturgröße kann auf elektronischem oder auch auf hydraulisch-mechanischem Weg verarbeitet werden, indem der Druck $\Delta p1$ der Arbeitsdruckleitung in der Steuerlogik einen entsprechend größeren Verstellwinkel signalisiert bis zum Auslösen des Schaltsignals zum Schließen der zweiten Bereichskupplung K2. Wird diese Verstellwinkel-Korrektur auf hydraulischem bzw. hydraulisch-mechanischem Weg realisiert, so dient hierzu eine entsprechende Verstelleinrichtung 15, die vorzugsweise den Arbeitsdruck $\Delta p1$ oder $\Delta p2$ gegen einen federelastisch wirkendes Glied drückt und in Abhängigkeit zu dem entsprechenden Federweg eine gegenüber dem theoretischen Verstellwinkel $\alpha th$ den Verstellwinkel um das Maß X vergrössert bis das Schaltsignal zum Schließen der zweiten Bereichskupplung ausgelöst wird. Die Arbeitsdrücke $\Delta p1$ und $\Delta p2$ haben sinngemäß entgegengesetzte Auswirkung auf die Verstellwegrichtung des Verstellorgans 14, wodurch das jeweilige Betriebsverhalten - Zug- oder Schubbetrieb - berücksichtigt wird. Dynamische Betriebsveränderungen unmittelbar vor oder innerhalb der Schaltphase werden hierdurch gezielt und spontan angepaßt. Die vorgesehenen Kupplungsausführungen erlauben problemlos geringfügige Synchronlaufabweichungen ohne die Schaltqualität merklich zu beeinflussen. Dies können z.B. Abweichungen sein, die aus unterschiedlichen Öltemperaturen, Ölfiskosität, Fertigungstoleranzen oder/und Verschleiß resultieren. Die Erfindung sieht für alle Ausführungsformen der Kupplungen mit Kupplungsprofil desweiteren eine Synchronisiereinrichtung, wie in Fig. 4 dargestellt, vor, um Synchronfehler auszugleichen und allen Forderungen hinsichtlich Komfort, Sicherheit und Standfestigkeit gerecht zu werden.

Einen Einfluß auf die Schaltqualität hat auch die Änderungsgeschwindigkeit der Hydrostatverstellung bzw. der Getriebeübersetzung. Eine entsprechende Einflußgröße kann zum Beispiel durch eine Motorbetriebsgröße, wie Drosselklappenstellung, Gaspedalweg, Größe einer Bremskraft, als Steuersignal über eine Steuerleitung 57 auf die Schaltsteuerung erzeugt werden. en. Der Ausschaltpunkt Sk1'kann hierbei variiert werden in Abhängigkeit zu diesen vorgenannten Betriebswerten, die je nach Anwendungsfall bzw. Art des Kraftfahrzeuges vorteilhafte Auswirkungen haben können.

Figur 2a zeigt den Druckverlauf $\Delta$ p1 und $\Delta$ p2 sowie das Drehmomentverhalten Tk1 und Tk2 innerhalb der Schaltzeit ts. Das Drehmoment Tk2 der zweiten Bereichskupplung K2 steigt, sobald diese geschlossen ist, kontinuierlich an, wobei automatisch das Drehmoment Tk1 der ersten Bereichskupplung K1 abfällt, was ausgelöst wird durch die Hydrostatrückstellung um die Verstellgröße Z innerhalb beider geschlossener Kupplungen K1 und K2. Der Arbeitsdruck $\Delta$p1 fällt in einem größeren Maße ab als das Kupplungsmoment TK1 und hat bei einer zwischenliegenden Stellgröße "S" drucklosen Zustand, in dem die volle Leistung rein mechanisch bzw. ohne Mitwirkung des stufenlosen Wandlers über beide geschlossenen Kupplungen K1 und K2 bzw. K2 und K3 übertragen wird. An diesem Punkt beginnt $\Delta$p2 anzusteigen.

In Figur 2b wird eine Steuereinrichtung dargestellt, die über eine hydraulische bzw. hydraulisch-mechanische Einrichtung den günstigen Öffnungspunkt der im vorangegangenen Schaltbereich B1 geschalteten Bereichskupplung K1 bestimmt. Die Einrichtung besteht aus einem Kupplungsschaltventil 51 und einem weiteren Ventil 52, das den Hydrostatdruck $\Delta$p1 innerhalb dem ersten Teil der Schaltphase über eine Steuerleitung 53 freigibt, um das Kupplungsschaltventil 51 vor vorzeitigem Öffnen zu schützen.

Im Hinblick auf Wirkungsgradoptimierung ist das Hydrostatgetriebe 1 mit einem variablen Speisedruck 10 versehen, der in Abhängigkeit zum Arbeitsdruck $\Delta$ p1 bzw. $\Delta$ p2 variiert. Der Speisedruck 10 dient auch als Kupplungsdruck für die Bereichskupplungen K1, K2, K3 usw. Entsprechend variabel ist auch der Steuerdruck 56 für das voranbeschriebene Ventil 52, das den Öffnungszeitpunkt der jeweils zuvor geschlossenen Kupplung bestimmt. Bei entsprechend niedrigen Belastungszuständen ist also das Steuerventil 52 infolge der konstanten Federkraft der Ventilfeder 55 sinngemäß auf einen sehr frühen Öffnungspunkt programmiert, wodurch trotz niedrigen Kupplungsdrücken bei niedrigen Belastungszuständen ein schneller Schaltablauf stattfinden kann.

Der Funktionsablauf ist wie folgt: Nach Synchronlauf der zu schaltenden zweiten Bereichskupplung bzw. der Folgekupplung K2 wird sofort über eine Steuerleitung 11$\alpha$ das Öffnungssignal erteilt. Da die Kupplung K1 aber noch nicht öffnen darf, wird der Hydrostatdruck $\Delta$p1 über die Steuerleitung 53, das Kupplungsventil 51 so lange in der Schaltstellung gehalten, bis $\Delta$p1 auf einen günstigen Ausschaltpunkt abgefallen ist, wodurch das Ventil 52 durch Nachlassen des Hydrostatdruckes $\Delta$p1 in der Steuerleitung 54 und über die Druckfeder 55 in Ausschaltstellung gebracht wird und damit auch der Druck in der Steuerleitung 53 abfällt, wodurch das Kupplungsschalt-ventil 51 in Öffnungsstellung gehen kann. Über eine Ventil-feder 55 kann der günstige Ausschaltpunkt bestimmt werden, der in Abhängigkeit zu der Art der Schaltkupplung bzw. dem Schaltweg der Kupplung steht. Anstelle des Arbeitsdruckes $\Delta$p1 kann auch hier der Arbeitsdruck $\Delta$p2 der anderen Druckseite 8 des Hydrostatkreislaufes verwendet werden, indem auf nicht dargestellte Weise das Kupplungsschaltventil 51 erst nach Einwirkung von $\Delta$p2 auf Öffnungsstellung gehen kann.

Zur Optimierung der Bereichsschaltung wird als weiteres Erfindungsmerkmal, insbesondere bei elektronischer Steuereinrichtung, der vor Schaltbeginn wirkende Hydrostatdruckwert $\Delta$p1 gespeichert und danach der Öffnungspunkt für die erste Kupplung K1 festgelegt, z.B. durch entsprechend großen Druckwert von $\Delta$p2. Dies kann auch hydraulisch-mechanisch gelöst werden, indem ein Steuerglied last- bzw. druckabhängig von $\Delta$p1 über eine Steuerweggröße auf einen Steuerpunkt geschoben wird, der nach einer Winkelstellung $\alpha$ eines Stellgliedes des Hydrostaten bei entsprechendem Druck $\Delta$p das Öffnungssignal für die Kupplung auslöst.

Anstelle der schaltpunktbestimmenden Hydrostatdruckwerte $\Delta$p1 oder/und $\Delta$p2 kann auch, wie bereits erwähnt, ein vom Hydrostatdruck $\Delta$p modulierter Steuerdruck, z. D. der Speisedruck 10 verwendet werden.

Um einen Schalt-Ruck zu verhindern, ist es wichtig, wie bereits beschrieben, daß das Öffnungssignal nach einer Hydrostatrückstellung innerhalb einer Korrekturgröße "Z" und zwar zwischen den Stellpunkten "S" und "SK1" ausgelöst wird. Dieses Signal erfolgt erfindungsgemäß aus einem Drucksignal $\Delta$p1 in der

Hydrostatdruckseite 7 des Hydrostatkreislaufes derart, daß nach zugeschalteter zweiter Bereichskupplung K2 und erfolgter Rückstellung um ein Korrekturmaß "X" der Hydrostat drehmomententlastet und der Druck Δp1 nahezu auf Null abgefallen ist, was dem Verstellpunkt "S" entspricht. Bei weiterer Rücknahme der Hydrostatverstellung bzw. des Stellwinkels α innerhalb der Verstellgröße "Y" kann die Kupplung nach erfolgtem Öffnungssignal infolge des Druckabfalles Δp1 öffnen. Bei Anwendung einer form- plus kraftschlüssigen Kupplung, wie eingangs beschrieben und in den Figuren 3, 4 und 5 dargestellt, ist bei gleichzeitiger Hydrostatverstellung ein sicherer Öffnungsvorgang gewährleistet, da diese Kupplung drehmomentabhängig aufgedrückt werden kann. Dies hat den Vorteil, daß in allen Betriebssituationen, sowohl bei Schub oder Zug und Hoch- oder Rückschaltung und bei allen Lastsituationen ein sehr schneller und ruckfreier Schaltablauf sichergestellt ist. Mit Rücksicht darauf, daß die zu öffnende Bereichskupplung einer gewissen Schaltzeit bzw. Öffnungszeit unterliegt, ist es sinnvoll, das Öffnungssignal etwas vorzuverlegen. Dies kann derart beeinflußt werden, daß die abfallende Drucklinie Δp1 auf einen entsprechend größeren Druckwert angesetzt bzw. programmiert werden kann. Die form- plus kraftschlüssige Kupplung, wie in Figur 3 dargestellt, bietet hier den Vorteil, daß nach ausgelöstem Öffnungssignal und danach erfolgtem Steuerdruckabfall in der entsprechenden ersten Bereichskupplung 21 der Druckkolben 24 über die drehmomentabhängige Abweisverzahnung bzw. Verzahnungsschräge in Neutrallage mit zusätzlicher Rückstellkraft der Feder 29 zurückgedrückt wird. Je nach Ausbildung der Kupplungsverzahnung 27 und dem gegebenen Ausschaltweg kann das Öffnungssignal bei entsprechend unterschiedlichen Druckgrößen angesetzt werden. Zum Auslösen des Öffnungssignales kann auch das Drucksignal Δp2 der anderen Druckseite 8 des Hydrostatkreislaufes dienen, wobei durch den Druckanstieg von Δp2 nach erreichtem mittleren Verstellpunkt "S" die zuvor geschlossene Bereichskupplung K1 zum Öffnen angesteuert und in drucklosen Zustand gebracht wird. Das Öffnungssignal wird bei dieser Ausführungsform also auf umgekehrte Weise gegenüber der vorbeschriebenen Ausführung durch Druckaufbau in einer der Arbeitsdruckleitungen des Hydrostatgetriebes ausgelöst. Diese Steuerungsart kann sehr vorteilhaft für bestimmte Anwendungen, z.B. in Arbeitsmaschinen wie Traktoren zur Wirkungsgradverbesserung genutzt werden, wenn dieser Punkt in den Hauptbetriebsbereich gelegt wird, da in diesem Übersetzungspunkt der Hydrostat entlastet und die Hydrostatverlustwerte entsprechend gering sind.

Das erste Ausführungsbeispiel zur Bildung des Öffnungssignals der Kupplung hat den Vorteil einer weitgehenden Unabhängigkeit von dem jeweiligen Lastzustand, da der Druckabfall von Δp1 auf Null einen definierten, relativ frühen Öffnungszeitpunkt bildet und bei Anwendung einer form- plus kraftschlüssigen Kupplung eine gewisse Öffnungszeit zum Ausrücken der zu öffnenden Kupplung nach erfolgtem Öffnungssignal unter gleichzeitiger Zuhilfenahme des abfallenden Kupplungsdrehmomentes dieser Kupplung gegeben ist. Bei Anwendung der zweiten Ausführungsalternative unter Zuhilfenahme des Arbeitsdruckes Δp2 der anderen Druckseite 8 findet der Ausrückvorgang nach dem Schaltpunkt S statt, wodurch eine kürzere Ausrückzeit entsprechend einem kürzeren Ausrückweg der zu öffnenden Kupplung angepaßt ist. Hier ist eine einfache Anpassung, insbesondere an die Ausführungsform bzw. die Zahnhöhe der Schaltverzahnung 27, Figur 4 möglich.

Um in allen Betriebssituationen ein sicheres Ausschalten der alten Kupplung zu gewährleisten, insbesondere bei Kupplungsausführungen, die im geschlossenen Zustand keine axiale Kraftkomponente erzeugen, wie in Figur 3a dargestellt, sieht die Erfindung vor, daß in der Schaltstellung $S_{K1}$ eine kurzzeitige Verstellsperre festgelegt bzw. einprogrammiert wird, um innerhalb dieser Zeitspanne im lastlosen Zustand der alten Kupplung eine gewisse Öffnungszeit einzuräumen, um einen Drehmomentaufbau innerhalb einer Öffnungszeit, die einem Öffnungsweg T entspricht, zu unterbinden. Diese Verstellsperre kann über das Sperrventil 17 oder Hauptregelventil 180 oder durch eine festeinprogrammierte Funktion in der Elektronik bzw. der Steuerlogik realisiert werden. Bei vielen Anwendungsfällen kann vorteilhaft sehr grosses Zahnspiel SV gewählt werden. Das Signal zum Auslösen dieser Funktion kann zweckmäßigerweise über die Drucksignale Δp1 und Δp2 oder auch ein Drehmomentensignal an einem der Getriebeglieder, das den lastlosen Zustand der alten Kupplung signalisiert, ausgelöst werden.

Für den Schubbetrieb gelten die gleichen Schaltfunktionen, jedoch mit dem Unterschied, daß die Korrektur der Verstellgrößen sich umgekehrt verhalten. Dies gilt auch, zum Beispiel bei einer Schubhochschaltung oder Schubrückschaltung.

Die Korrektur des Verstell- ∡ α bzw. der Verstellgrößen wird in diesen Betriebsfällen sinngemäß durch den Druck Δp2 der jeweils anderen Druckseite 8 bewirkt.

Für Fahrzeuge, die feste Übersetzungseinstellungen, wie z.B. bei Arbeitsmaschinen erforderlich, benötigen, sieht die Erfindung eine Einrichtung vor, bei der der Übersetzungspunkt an zwei Bereichsgrenzen für einen Dauerbetrieb oder auch für Bestriebszustände mit längerer Verweildauer an diesem Übersetzungspunkt festgehalten wird.Hierfür kann die bereits beschriebene Einrichtung dienen, wobei nach geschlossener neuer Kupplung die alte Kupplung geschlossen bleibt und die Verstelleinrichtung des Getriebes bzw.

der Verstellwinkel α des Hydrostatgetriebes sich innerhalb des Korrekturbereiches Y und X bzw. Z in Abhängigkeit des Lastzustandes bewegen kann. Mit Rücksicht auf Wirkungsgradoptimierung sieht die Erfindung alternativ ein nicht dargestelltes Bypaßventil zwischen den beiden Arbeitsdruckleitungen 7 und 8 des Hydrostatgetriebes vor, das in diesem Betriebszustand bzw. Übersetzungszustand bei geschlossenen beiden Kupplungen geöffnet werden kann, um Hydrostatdruckverluste zu Verringern. Vor Öffnen der alten Kupplung bzw. einer der beiden Kupplungen wird das Bypaßventil in Abhängigkeit zu einer oder mehreren Betriebsgrößen wieder geschlossen, um den hydrostatischen Druckkreislauf zu aktivieren. Der Schließvorgang des Bypaßventiles erfolgt zweckmäßigerweise in Abhängigkeit des Verstellwinkels α des stufenlosen Getriebeteiles, wobei vorzugsweise der Bypaßventil-Schließvorgang allmählich, z.B. über entsprechende Drosseleinrichtungen erfolgt, um einen kontinuierlichen stoßfreien Zustand zu gewährleisten. Das Bypaßventil kann hierbei verschiedenartig ausgebildet werden, z.B. auch in der Form, daß ein gewisser Differenzdruck zwischen den beiden Arbeitsdruckleitungen 7 und 8 aufrechterhalten bleibt und in Abhängigkeit der Größe des Korrekturwertes X oder Y unterschiedliche Druckgröße $\Delta p$ aufweist. Dieser Differenzdruck $\Delta p$ kann auch als Steuerdruck bzw. als Signal für das Schließen des Bypaßventiles dienen, wodurch signalisiert wird, ob der Übersetzungspunkt bei beiden geschlossenen Bereichskupplungen verlassen werden soll. Ausgehend von dieser Signalgröße kann dann auch das Signal zum Öffnen einer der beiden Kupplungen gegeben werden. Welche der beiden Kupplungen geöffnet wird, hängt von dem gewünschten bzw. neu zu betreibenden Bereich B1 oder B2 ab. Bei Ausführung ohne Bypaßventil kann das Öffnungssignal für die alte Bereichskupplung wie bereits beschrieben, eine oder beide der Betriebsdrücke $\Delta p1$; $\Delta p2$ oder/und $\Delta p$ benutzt werden, die aus ihren jeweiligen Druckgrößen signalisieren, ob der Zustand bei beiden geschlossenen Kupplungen bzw. dieser Übersetzungszustand verlassen werden soll. Als Öffnungssignal der alten Kupplung kann auch die innerhalb des Korrekturbereiches X, Y bzw. Z auftretende Winkelveränderung des Verstellwinkels α oder die Gaspedal-Wegänderung oder andere Betriebsgrößen, die geeignet sind, eine Übersetzungsänderung zu bewirken bzw. zu signalisieren, benutzt werden. Eine feste Übersetzungseinstellung innerhalb beider geschlossener Kupplungen K1 und K2; K2, 3 kann auch über eine entsprechende Wähleinrichtung 108 vorgegeben werden, die über eine mechanische oder/und elektrische oder/und hydraulische Einrichtung vorgegeben werden kann.

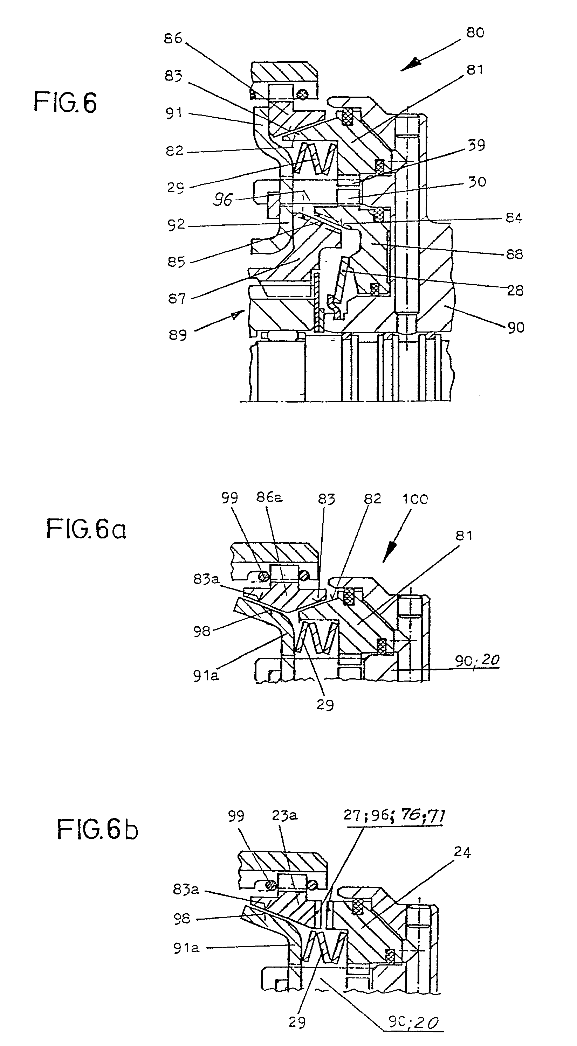

Bei Fahrzeugen, z.B. PKW's, die kurzzeitige Lastunterbrechungen erlauben, kann das Bypaßventil zwischen den Arbeitsdruckleitungen 7 und 8 ebenfalls vorteilhaft eingesetzt werden, wobei bei gleichzeitiger automatischer Gasrücknahme in der Schaltphase das Bypaßventil geöffnet wird, um beispielsweise die Synchronisierleistung bei Kupplungsausführung 21, Fig. 21 oder Ausführung 80, Fig. 6 mit Reibelementen zu minimieren.

Alle für die Schaltfunktionen erforderlichen Signale können hydraulisch oder/und mechanisch, elektrisch oder auf elektronischem Weg übertragen werden. Für Signalgrößen für Verstellwinkel, Drücke, Drosselklappenstellung, Gaspedalweg können sehr vorteilhaft, wie ansich bekannt, Potentiometer eingesetzt werden. Ein Beispiel für hydraulische Schaltfunktion ist in Figur 2b dargestellt und an anderer Stelle näher beschrieben.

Eine erfindungsgemäß vorgesehene Schalt-Hysterese-Einrichtung sorgt dafür, daß ein zu häufiges Auf- und Abschalten bei Übersetzung im Schaltbereich verhindert wird. Diese Einrichtung kann angesteuert werden durch ein Signal, das resultiert aus einer bestimmten Zeitgröße oder/und einer Differenz der Lastgröße, z.B. Arbeitsdruck $\Delta p1$ und $\Delta p2$ oder/und einer Verstellgröße /Verstellwinkel α oder/und Änderungsgeschwindigkeit einer Betriebsgröße, z.B. Drehzahländerungen, Gaspedal-Wegänderungen oder/und anderen Betriebsgrößen. Auf hydraulischem Weg ist z.B. eine Rückschaltung in den vorhergehenden Bereich so lange unterbunden, bis ein bestimmter Kolben bzw. ein bestimmtes Ventilglied in einem Drosselventil eine festgelegte begrenzte Wegstrecke zurückgelegt hat (nicht dargestellt). Bei einer elektronischen Steuereinrichtung werden die Information für die Schalt-Hysterese aus vorgenannten Betriebsgrößen in den Mikroprozessor eingegeben und entsprechend verarbeitet.

Nach Figur 3a ist eine Ausführungsform 71 des Kupplungsprofils 27 dargestellt, das nichtabweisende Mitnehmerflächen 74 besitzt, denen abweisende Mitnehmerflächen 72 zugeordnet sind. Die nichtabweisenden Mitnehmerflächen 74 mit einer tragenden Höhe T besitzen keinen oder nur einen sehr kleinen Neigungswinkel γ , der innerhalb des Reibungswinkels aller Kupplungselemente liegt. Dieser Winkel γ kann auch unter Umständen negativ ausgebildet werden, so daß hier ein Ineinanderziehen der Kupplungsringe im geschlossenen Zustand bewirkt wird. Die Rückholfedern 28; 29 sind bei dieser Ausführungsform zweckmäßigerweise so bemessen, daß auch im Lastzustand nach Wegnahme des Schaltdruckes die Kupplungsglieder Außereingriff gebracht werden können. Dies gilt auch bei Ausführung nach Figur 3 für die hydraulische Rückführung, die entsprechend hohe Rückstellkräfte in den Kolben bzw. Kolbenflächen 217; 219 aufweist.

Der Schrägungswinkel $\gamma_b$ bzw. $\gamma_a$ der Schrägflächen 72 (bzw. 404 Figur 3a, 3d) sowie die Kolbenflächen des Kolbens 24; 25 und der Schaltdruck sind erfindungsgemäß so ausgelegt, daß in der Schaltphase über diese abweisenden Mitnehmerflächen 72; 404 gegen das maximale Kupplungsmoment die neue Kupplung schließen, d.h. die Schaltverzahnung 27; 401 ineinandergreifen kann. Der Schaltdruck kann hierzu erfindungsgemäß kurzzeitig zum Ineinandergreifen der Schaltzähne 27; 401; . . . angehoben werden bis die Kupplung geschlossen ist. Dies gilt auch für die Kupplungsausführung mit Abweisverzahnung, die im geschlossenen Zustand eine drehmomentabhängige axiale Kraftkomponente aufweist, wobei die axialen Abweiskräfte, resultierend aus den Schrägflächen 522; 521; 313; 318 unter einem Winkel $\gamma$, (siehe Figur 7 bis 7c) durch ausreichende Kolben-Schaltkraft überwunden wird.

Bei Anwendung der Kupplungsverzahnung 71, die im geschlossenen Zustand keine axiale drehmomentabhängige Kraftkomponente erzeugt, ist ein Öffnungsvorgang nur möglich, wenn die Kupplung nahezu drehmomentfrei ist. Dies bedeutet, daß in der Schaltphase nach geschlossener neuer Kupplung die alte Kupplung erst öffnet, nachdem das Drehmoment so weit abgefallen ist, bis die Feder-

Die tragende Zahnhöhe T des Kupplungsprofils kann auf ein sehr niedriges Maß von z.B. kleiner als 1 mm, je nach Größe des Drehmomentes und der baulichen Verhältnisse, bemessen werden, so daß der Öffnungsweg sehr kurz gehalten werden kann. Das Zahnspiel SV kann in den meisten Anwendungsfällen relativ groß ausgeführt werden, was den Einschaltvorgang sowie den Ausschaltvorgang der Kupplung begünstigt.

Die Abweisflächen 72 dienen auch zum raschen Entkuppeln und Zurückschieben des Kupplungsringes in Neutrallage nachdem der erste Öffnungsweg entsprechend dem Maß T über die Federkraft der Rückholfeder 28; 29 oder eine hydraulische Rückführung über Druckkolben 217; 219 erfolgt ist.

Das Kupplungsprofil 71 besitzt unter anderem den Vorteil, daß das Verdrehspiel SV sehr klein gehalten werden kann und trotzdem in der Schaltphase innerhalb der abweisenden Mitnehmerflächen 72 beider Kupplungsringe großes Verdrehspiel bei Eingriffsbeginn gegeben ist, um ein sicheres Ineinandergreifen der Kupplungsverzahnung zu gewährleisten.

Der Winkel $\gamma$ kann, wie erwähnt, auch in negative Richtung - nicht dargestellt - ausgelegt werden, so daß in Abhängigkeit zum Drehmoment ein Ineinanderziehen des Kupplungsprofils bewirkt wird. Auch ein Hinterschneiden der Kupplungsverzahnung, wie aus Fig. 3d ersichtlich, ist möglich, so daß gezielt ein Verhaken gegen Ausklinken im Drehmomentzustand erreicht wird. Damit ist es möglich, daß nach erfolgtem Öffnungssignal bei drucklosem Zustand die Kupplung erst in drehmomentlosem Zustand öffnen kann. Bei ausreichendem Zahnspiel 403 in Umfangsrichtung kann diese Ausführung eine sinnvolle Lösung darstellen. Die Rückholfeder 29;28;63 kann hierbei auf relativ hohe Federkraft zugunsten eines sehr schnellen Offnungsvorganges ausgelegt werden, da sie bei dieser Ausführungsform nicht bestimmend für den Öffnungszeitpunkt bzw. für eine von einem Reibungswinkel abhängige Drehmomentgröße der alten Kupplung ist.

Das Kupplungsprofil kann nach spanabhebendem Fertigungsverfahren oder für größere Serienfertigung bei nahezu allen Ausführungsformen auch spanlos durch Anwendung der Schmiedetechnik, Sintertechnik, Blechpräge-Technik, Fließpreßtechnik sehr vorteilhaft hergestellt werden. Auch das nach Fig. 3d dargestellte Kupplungsprofil mit Verhakungseffekt oder mit negativem Winkel kann spanlos hergestellt werden. Dazu wird bevorzugt im Kaltpreßverfahren der entsprechende negative Winkel $\gamma$ oder der Verhakungsüberstand 406 durch eine Einprägung 402 erzielt. Die Anschrägungen der tragenden Profilflächen 404 und 405 unter einem Winkel $\gamma_a$ und Schrägen bzw. Rundungen 407 am Zahnkopf sorgen für ein müheloses und schonendes Ineinandergreifen beim Schließvorgang sowie beim Öffnungsvorgang als Unterstützung zum schnellen Zurückführen des Kupplungsringes 408 und des drucklosen Kolbens in Neutrallage.

Der Vorteil dieser Kupplungsverzahnung liegt darin, daß nur sehr geringe Schaltkräfte und somit sehr kleine Kolbenflächen und Kupplungsdrücke erforderlich sind. Entsprechend niedrig sind auch die Befüllzeiten des Kolbenraumes innerhalb des Schließvorganges. Zur Beschleunigung des Öffnungsvorganges ist der Kolbenraum für den Druckkolben 24 mit einem Entleerungsventil 75 versehen, das den Vorteil bildet, daß nach erfolgtem Öffnungssignal, das bei dieser Kupplungsausführung spontan nach Schließen der neuen Kupplung ausgelöst wird, der Kolbenraum sofort entleeren kann durch die Rotationskräfte, so daß nach ausreichendem Drehmomentabfall der Druckkolben bzw. das Kupplungsglied 24 spontan über die Federkräfte 29 rückführbar ist. In einer weiteren Ausführungsform nach Fig. 3b und 3c ist der Kupplungsring 70, 69 vom Kolben 61; 62 getrennt, so daß nach dem erfolgten Öffnungssignal über eigene Federn 65; 63 der Druckkolben 65; 62 spontan zurückgeführt werden kann. Der Kupplungsring 69;70 wird über die Federelemente 29 bzw. 64 nach ausreichendem Drehmomentabfall spontan zurückgeführt. Bei Ausführung nach Fig. 3c besitzt die Kupplung separate Rückführkolbenflä-chen 217; 219, die eine gezielte Rückführung des Kolbens 215 über ein entsprechendes Drucksignal nach erfolgtem Öffnungssignal innerhalb dem Kolbenraum 219 gewährleisten.

Die Kupplungsausführung nach Fig. 6 ist eine Reibkupplung mit konischen Reibflächen. Auf einen Kupplungsträger 90 sind drehfest aber axial verschiebbare Kupplungsglieder 81 bzw 88 gelagert, die über mit Druckmedium beaufschlagbare Druckkolben axial gegen den Druck der Rückholfedern 29 bzw. 28 axial verschiebbar sind und mit seinen konischen Reibflächen 82 bzw. 84 gegen die ebenfalls konisch ausgebildeten Gegenreibflächen 83 und 85 der zu kuppelnden Kupplungsglieder 86 und 87 zum Schliessen der Kupplung angedrückt werden. Der dem Druckkolben 81 bzw. 88 gegenüberliegende Kupplungsring 86 bzw. 87 wird gegen eine auf dem Kupplungsträger 90 gelagerte und axialfeste Druckscheibe 91 bzw. 92 abgestützt. Bei Ausbildung als Doppelkupplung kann vorteilhaft für beide Kupplungen eine gemeinsame Druckscheibe 91 dienen, wie in Fig. 6 dargestellt. Die Kupplung ist als Mehrfachkupplung ausführbar, wobei zwei oder mehrere Kupplungen übereinander oder nebeneinander anzuordnen sind.

Die Kupplungsausführung 80 nach Fig. 6 kann durch die konische Ausführung in Abhängigkeit zur Kolbenfläche ein relativ hohes Reibmoment bzw. Kupplungsmoment aufnehmen. Voraussetzung ist, daß die Reibleistung niedrig gehalten wird. Dies ist bei der erfindungsgemäßen Schalt- und Steuereinrichtung dadurch möglich, daß die Schaltung im Synchronzustand erfolgt und das Öffnungssignal zum Öffnen der geschlossenen Kupplung erst nach Abfall des Drehmomentes durch die innerhalb beider geschlossener Kupplungen erfolgten Hydrostatrückführung um das entsprechende Korrekturmaß Z bzw. X plus Y erfolgt. Aufgrund der nahezu reibleistungsfreien Schaltung, kann die Kupplung auf relativ hohe Flächenpressung innerhalb der konischen Reibflächen und somit auf ein relativ hohes Drehmoment ausgelegt werden. Das Schleppmoment dieser Reibkupplung entfällt im Gegensatz zu den bekannten Lamellenreibkupplungen, da die Reibflächen 82, 83 bzw. 85, 84 im geöffneten Zustand gezielt voneinander im getrennten Zustand gehalten werden. Darüber hinaus können Bauraum und Kosten gegenüber einer Lamellenkupplung wesentlich reduziert werden.

Bei Anwendung stufenloser mechanischer Getriebe deren lastabnängiger Drehzahlschlupf gering und deren Getriebeelemente sehr schlupfempfindlich sind, ist diese Konuskupplung vorteilhaft.

Die Kupplungsausführung 89 Fig. 6 mit konischen Reibflächen 85, 84 kann auch mit einem Mitnahmeprofil 27; Fig. 3a ausgebildet werden. Der erfindungsgemäße Vorteil dieser Ausführung beruht darauf, daß größere Synchronabweichungen in der Schaltphase bei hoher Schaltqualität überbrückt werden können, derart, daß bis Erreichen des Synchronzustandes über die konischen Reibflächen 85, 84 vor Einrasten der Kupplungsverzahnung der Synchronlauf hergestellt werden kann. Das Mitnahme- bzw. Kupplungsprofil 27 ist hierbei zweckmäßigerweise mit in Umfangsrichtung geneigten Schrägflächen oder Rundungen 73 versehen, um insbesondere bei höheren Relativ-Drehzahlen zwischen den beiden Kupplungsringen 87, 88 nach bereits eingeleitetem Schaltvorgang den Synchronisiereffekt über die konischen Reibflächen 85, 84 vor dem Einrasten bzw. Ineinandergreifen der Kupplungsverzahnung zu ermöglichen. Die Mitnahmeflächen der Kupplungsverzahnung bzw. des Kupplungsprofils können hierbei als Abweisverzahnung oder als Geradverzahnung ohne axialem Abweiseffekt ausgebildet werden. Je nach Anforderung an Schaltqualität, Schaltzeit, Kupplungsmomente und anderem kann eine weitgehend genaue Anpassung durch die Abstimmung über Kolbengeschwindigkeit, Schrägungswinkel der Schrägflächen bzw. Rundungen 73, Konuswinkel der Reibflächen erzielt werden. Die Kolbenfläche des Druckkolbens 88 kann zugunsten höherer Kolbengeschwindigkeit relativ klein ausgelegt werden, da die Haltekräfte durch die formschlüssige Kupplungsart entsprechend klein ist. Das Kupplungsprofil ist hierbei verschiedenartig ausführbar, wie zum Beispiel in den Figuren 3a; 6a, 6b und 7 bis 7c dargestellt. Bei sorgfältiger Auslegung des Konuswinkels der Reibflächen 82, 83; 85, 84 und der Kupplungsverzahnung ist unter Berücksichtigung des Reibwinkels die Gefahr einer Selbsthemmung ausgeschlossen.

Auch bei Ausbildung des Kupplungsprofiles als axiale Stirnverzahnung 27, wie in Fig. 3 und 3b dargestellt, kann ein wirksamer Synchronisierungseffekt dadurch erzielt werden, daß die Schrägflächen 97 und Rundungen 73, Fig. 3a; 6b in Umfangsrichtung entsprechend flach ausgebildet sind, so daß ein Einrasten der Kupplungsverzahnung erst stattfinden kann, nachdem die Relativdrehzahl zwischen den beiden Kupplungsringen auf entsprechend niedriges Maß gesenkt worden ist durch den Synchronisiereffekt infolge des Aufeinandergleitens der Stirnflächen 94 der Kupplungsverzahnung 27. Der Synchronisiereffekt kann weiter erhöht werden dadurch, daß gemäß der Erfindung die axiale Anlagefläche für den Kupplungsring 23a Fig. 6b als konische Reibfläche 83a, 98.

Dies gilt ebenfalls für die reine Reibkupplung nach Ausführung Fig. 6a, bei der der Kupplungsring 86a zwei konische Reibflächen 83 und 83a besitzt, wobei eine Reibfläche gegen den axial verschiebbaren Kupplungsring 81 und die andere Reibfläche gegen die Druckplatte 91a angepreßt wird. Der Kupplungsring 86a ist hierbei axial gegen ein Federelement 99 verschiebbar, so daß bei Neutralstellung die Rückführung des Kupplungsringes 86a möglich ist, um die Reibflächen 83a, 98 berührungsfrei und schleppverlustfrei zu halten. Die doppelseitige Reibflächenausbildung nach Reibkupplungsausführung Fig. 6c kann das Kupplungsmoment nahezu verdoppeln.

Da die Schaltungen bei Anwendung in stufenlosen Verzweigungsgetrieben im Synchronbereich stattfinden, ist die Kupplungsleistung bzw. Reibleistung oder Synchronisierleistung relativ niedrig, so daß die spezifische Flächenpressung relativ hoch angesetzt werden kann für alle Reib- bzw. Synchronisierflächen. Eine vorteilhafte Unterstützung wird auch durch entsprechende Motordrehzahlsteuerung innerhalb des Schaltvorganges bewirkt, indem der Kraftstoffzufluß kurzzeitig unterbrochen bzw. verringert wird.

Als Synchronisiereinrichtung kann außer den in Fig. 5 und 6 dargestellten Lösungen jede bekannte Art, z.B. zwischengelagerte Reibringe als federnde oder nichtfedernde Elemente Verwendung finden, wie bei bekannten Synchronisierungen bereits üblich.

Die Kupplungseinrichtung nach Figur 4 und 5 ist, im Unterschied zu Ausführung nach Figur 3, mit einer Synchronisiereinrichtung 40 ausgestattet, die dazu dient, evtl. auftretende Synchronfehler auszugleichen. Auch für Stufenschaltgetriebe mit oder ohne automatischer Schaltung bietet diese Kupplung eine sinnvolle Anwendung. Je nach den Anforderungen kann die Synchronisierung als Normalsynchronisierung oder als Sperrsynchronisierung ausgebildet werden. Der Synchronring 31 ist auf dem drehfest auf einem Kupplungsträger 30 gelagerten Kupplungsring bzw. dem Kolben 24 axial in Schaltrichtung fixiert und in die Gegenrichtung gegen Federelemente 38 unter Federkraft verschiebbar. Mitnehmerlappen bzw. Mitnehmer 32 sichern den Synchronring 31 gegen Verdrehung gegenüber dem Kupplungsring bzw. Kolben 24. Die Mitnehmer 32 des Synchronringes greifen in Ausnehmungen 37 des Kupplungsringes bzw. des Kolbens ein und werden über Mitnehmerflächen 35, 36 verdrehgesichert. Die Mitnehmerflächen 35, 36 sind in Axialrichtung entweder gerade oder schräg unter einem gewissen Winkel $\beta$ ausgebildet. Bei Verdrehung wird entsprechend der Größe des Schrägungswinkels $\beta$ eine axiale Kraftkomponente so groß ist, daß ein Durchschalten und Ineinandergreifen der Kupplungsverzahnung 27 so lange verhindert wird, bis der Synchronlauf hergestellt ist. Bei Anwendung in einem stufenlosen leistungsverzweigten Getriebe ist es sinnvoll, den Winkel $\beta$ kleiner auszulegen, so daß die Sperrfunktion nicht erreichbar ist. Dies kann in diesem Fall als Unterstützung der komponente so groß ist durch entsprechende Ausbildung des Winkels $\beta$, daß ein Durchschalten und Ineinandergreifen der Kupplungsverzahnung 27 so lange verhindert wird bis der Synchronlauf hergestellt ist. Bei Anwendung in einem stufenlosen leistungsverzweigten Getriebe ist es sinnvoll, den Winkel $\beta$ kleiner auszulegen, so daß die Sperrfunktion nicht erreichbar wird. Sie kann in diesem Fall als Unterstützung der Federkraft 38 dienen, die somit auf kleinere Druckkräfte ausgelegt werden kann. Sobald der Synchronlauf erreicht ist, wird bei der Sperrsynchronisierung infolge Nachlassens des Drehmomentes der Kolben bzw. Kupplungsring 24 gegen den Druck der Federn 38 zum Ineinandereingreifen der Kupplungsverzahnung 27 axial bis zu seinem Anschlag durchgedrückt. Bei Ausbildung als Normalsynchronisierung wird innerhalb dem Schaltweg, sobald die Anlage der beiden Reibflächen 34 des Kupplungsringes und des Synchronringes das Reibmoment bzw. Synchronisiermoment erzeugt, das in Abhängigkeit zur Große der Federkraft der Federelemente 38 und der aus dem kleineren Schrägungswinkel $\beta$ resultierenden Axialkomponente ist. Ist der Winkel $\beta$ gleich Null, so wird die gesamte axiale Synchronisierkraft über die Federelemente 38 bewirkt. Die Mitnehmerverzahnung 27 ist zweckmäßigerweise bei dieser Kupplungsausführung gemäß Figur 3, 4 und 5 vorteilhaft als Abweisverzahnung, das heißt mit in Axialrichtung angeschrägten Mitnehmerflächen, die ein drehmomentabhängiges Aufdrücken der Kupplung bewirken, sobald der Schaltdruck ausgeschaltet wird. Es ist aber auch möglich, diese Mitnehmerverzahnung 27 als Geradverzahnung oder mit einem verhältnismäßig kleinem Winkel, zum Beispiel unter 5 Grad, auszubilden, um im lastlosen Zustand bzw. drehmomentlosen Zustand ein sicheres Ausschalten zu gewährleisten. Die Kolbenfläche des Druckkolbens 24 kann dementsprechend kleiner ausgebildet werden. Für manche Einsatzfälle ist eine Anzeige der Schaltstellung der Kupplung mittels eines mit dem Kolben 24 in Verbindung stehenden Kupplungsgliedes 30 möglich.

Der Hydrostat bzw. der stufenlose Wandler wird spontan nach Schließen der neuen Kupplung bzw. der Folgekupplung in die Gegenrichtung umgesteuert. Das nach Schließen der Folgekupplung erfolgte Öffnungssignal zum Öffnen der geschalteten Kupplung kann auf
Das nach der neu zu schließenden Bereichskupplung erfolgte Öffnungssignal zum Öffnen der zuvor geschalteten Kupplung kann auf verschiedene Weise bzw. mit verschiedenen Einrichtungen erzeugt werden. Die Wahl der jeweiligen Einrichtungsart ist abhängig von der jeweils geforderten Schaltqualität oder der vorgesehenen Art der Steuereinrichtung, die elektronisch oder/und hydraulischmechanisch ausführbar ist. Nach einer relativ einfachen Steuerungsart ist es möglich, das Öffnungssignal sofort nach Schliessen der Folgekupplung auszulösen, wobei der Schließdruck der Folgekupplung als Öffnungssignal dienen kann. Die Öffnungszeit ist hierbei abhängig von dem Öffnungsweg und dem auftretenden Drehmoment der zu öffnenden Kupplung innerhalb der Rückführzeit des Druckkolbens 24. Diese Öffnungszeit kann auch beeinflußt werden durch einen gezielten Druck-Abbau der zu öffnenden Kupplung, der nicht spontan, sondern durch einen eingebauten Drosseleffekt erzielt werden kann.

Eine weitere Möglichkeit für das Öffnungssignal sieht eine fest einprogrammierte Zeitgröße nach erfolgtem Schließvorgang der Folgekupplung vor, die je nach Anwendungsart, z.B. die Größe von 0,05 Sekunden haben kann. Bei Anwendung einer hydraulisch-mechanischen Steuerungsart kann hier ein Dämpfungsventil dienen, das nach einem bestimmten Ventil-Weg das Öffnungssignal auslöst.

Eine andere Lösungsmöglichkeit sieht eine fest einprogrammierte Zeitgröße von z.B. 0,1 Sekunden vor, die übersteuert werden kann durch eine oder mehrere Betriebsgrößen, z.B. eine oder beide Arbeitsdruckgrößen $\Delta p1$ und $\Delta p2$ oder/und eine Änderungsgeschwindigkeid der Getriebeübersetzung, des Gaspedals bzw. der Drosselklappe oder /und eines Bremsorgans bzw. Bremsgröße. Diese zuletzt genannte Möglichkeit ist sinnvoll, um innerhalb der Schaltphase auftretende Betriebsveränderungen, die z.B. durch spontan sich ändernde Lastzustände, Zugbetrieb, Schubbetrieb oder durch Einfluß von Nebenaggregaten, beispielsweise durch einen Zapfwellenantrieb bei Arbeitsmaschinen, Hubvorrichtungen usw. auftreten können. Im Hinblick auf eine hohe Verstellgeschwindigkeit, insbesondere innerhalb eines Bremsvorganges, wird durch den Einfluß einer Bremsgröße, z.B. Bremskraftgröße, hydraulischer Bremsdruck, der Schaltablauf dadurch beschleunigt, daß nach Schließen der Folgekupplung spontan das Öffnungssignal der anderen Kupplung erteilt wird. Eine, z.B. vorgegebene bzw. vorprogrammierte Schaltzeitgröße kann hier durch den Einfluß der Bremse übersteuert werden. Das Bremssignal löst in der Steuerlogik automatisch das entsprechende Signal nach geschlossener Folgekupplung aus. Bei hydraulisch-mechanischer Steuereinrichtung wird ein entsprechendes Ventil angesteuert. Zu der möglichen Verstellgeschwindigkeit innerhalb der Schaltphase ist somit gezielt der Zeitpunkt zum Öffnen der Kupplung bestimmbar.

Im Hinblick auf ausreichende Schaltsicherheit ist die Schalteinrichtung so ausgelegt, daß bei Nichtöffnen der alten Kupplung durch den Druckaufbau im Hydrostatsystem automatisch die Hydrostatverstellung wieder zurückgeführt wird, um den drehmomentlosen Zustand der zu öffnenden Kupplung zu finden. Desweiteren ist eine Schaltsperre innerhalb der nichtschaltbaren Verstellbereiche des stufenlosen Wandlers vorgesehen.

Bei Anwendung von Reibkupplungen, Lamellenkupplungen oder insbesondere Konuskupplungen bietet die erfindungsgemäße Kupplungssteuerung den Vorteil, daß die Reibarbeit nahezu auf Null gesenkt werden kann.

Eine weitere Verbesserung der erfindungsgemäßen Schalteinrichtung sieht vor, daß innerhalb der Schaltphase vor Beginn der Bereichsschaltung über die Steuereinrichtung automatisch eine Drehmomentabsenkung durch ein Signal ausgelöst wird, das die Motorregalung derart beeinflußt, daß kurzzeitig die Kraftstoffzufuhr verringert bzw. unterbrochen wird. Die lastabhängige Verstellweg-Korrektur Z bzw. X, Y wird hierbei reduziert bzw. nahezu auf Null gesenkt, wodurch die im Schaltvorgang belasteten Glieder entsprechend geringen Anforderungen unterliegen. Diese Lösung ist sinnvoll z.B. bei einem PKW zur Erzielung absolut nahtloser und nicht wahrnehmbarer Bereichsschaltungen.

Unter der Bezeichnung "Synchronlauf, Synchronpunkt" wird der Synchronbereich mit geringen Drehzahlabweichungen verstanden, der im Rahmen eines allgemeinen Toleranzfeldes liegt.

Im Schließvorgang der Kupplungen ist gemäß der Erfindung die Steuereinrichtung so ausgelegt, daß kurzzeitig der Steuerdruck angehoben wird bis die Kupplung geschlossen ist. Damit wird den erhöhten Abweiskräften der Kupplungsverzahnung beim Ineinandergleiten entgegengewirkt. Die Steuerdrücke können zugunsten des Wirkungsgrades lastabhängig, z. B. über ein Hydrostatdrucksignal, moduliert werden.

Die in der Beschreibung nicht näher beschriebenen hydraulischmechanischen Einrichtungen, z.B. Ventile oder hydraulische, mechanische, elektrische oder elektronische Einzelfunktionen beruhen auf bekannten Einzelelementen bzw. auf für den Durchschnittsfachmann bekannten Maßnahmen.

Die gemäß der Erfindung ausgebildeten Kupplungen nach Figur 3 bis 6 sind Vorteilhaft in automatisch schaltbaren Stufengetrieben einsetzbar. Die Schalteinrichtung ist hierfür so ausgelegt, daß die neue Kupplung erst nach geöffneter alter Kupplung schließt und der Synchronzustand der Kupplungsglieder der neuen Kupplung entweder durch Gaswegnahme innerhalb der Schaltphase auf manuellem oder automatischem Weg erfolgt oder/und durch eine entsprechende Synchroneinrichtung, wie in Figur 4 und 5 dargestellt, der Synchronzustand bei geöffneter Trennkupplung und geöffneter alter Kupplung hergestellt wird. Die Motorführung bzw. die erwähnte Gaswegnahme kann, wie ansich bekannt, durch eine gezielte vorprogrammierte, insbesondere elektronische Steuereinrichtung realisiert werden, wobei vorzugsweise über einen Drehzahlvergleich zweier oder mehrerer Getriebeglieder der Synchronpunkt für die Schaltung automatisch ermittelt und danach das Schaltsignal wie bei den bereits beschriebenen stufenlosen Getriebeausführungen zum Schließen der neuen Kupplung erteilt wird. Um mögliche Schaltstöße infolge möglicher Synchronfehler zu vermeiden, ist es zweckmäßig, die am Getriebeeingang oder im Getriebe alternativ vorgesehene als Reibkupplung ausgebildete Trennkupplung kurzzeitig zu öffnen. Auch die in der Kupplungsausführung nach Figur 4 und 5 dargestellten Synchroneinrichtung ist geeignet, geringfügige Synchronfehler auszugleichen, wodurch bei bestimmten Anwendungsfällen die erwähnte Trennkupplung eingespart werden kann.

Die Kupplungsausführungen nach Figur 3 bis 6 eignen sich auch besonders in automatischen Stufengetrieben, die wie ansich bekannt, als Doppelkupplungs-Getriebe ausgebildet sind. Das Doppelkupplungs-Getriebe unterscheidet sich vom üblichen Stufengetriebe dadurch, daß wenigstens zwei lastschaltbare Trennkupplungen vorgesehen sind, die nach einem im lastlosen Zustand vorgewählten Gang wechselweise die Leistungsübertragung übernehmen. Innerhalb eines bereits geschalteten Ganges wird hierbei der nächste Gang vorgewählt in der Art, daß bei geöffneter zweiter Trennkupplung für den nächsten Gang über eine Synchroneinrichtung der lose Triebstrang in seiner Drehzahl an die Drehzshl der neuen Kupplung bevorzugt automatisch angeglichen und geschaltet wird. Mit der gemäß der Erfindung ausgebildeten Kupplungsausführung 21 nach Figur 4 wird der lose Triebstrang über eine Synchronisiereinrichtung 31; 40 an der neuen Kupplung 21 in Gleichlauf gebracht und danach die Kupplung in lastlosem Zustand geschlossen. Nach Abschluß dieser Kupplungsschaltung kann nun die Schaltung in den nächsten Gang eingeleitet werden durch Öffnen der alten und gleichzeitig Schließen der neuen als Reibkupplung ausgebildeten (nicht dargestellten) Trennkupplung.

Die Schalteinrichtung gemäß dieser Erfindung bietet bei Anwendung in den beschriebenen automatischen Stufengetrieben den weiteren Vorteil, daß keine Schaltgestänge und mechanischen Schalteinrichtungen, wie bei Stufengetrieben allgemein bekannt, nötig sind, wodurch eine sehr kompakte und fahrzeugfreundliche Bauweise realisierbar ist. Die Kupplungseinrichttung nach Figur 4 und 5 ist gegenüber dem bekannten mechanisch schaltbaren Synchronisier-Schalteinrichtungen kostengünstiger und auch bauraumgünstiger herstellbar. Desweiteren ist die Modulbauweise durch Wegfall des Schaltgestänges und der Schaltzylinder einfacher realisierbar und das Gehäuse kann einfacher und kostengünstiger hergestellt werden.

Die Kupplung nach Figur 3 bis 7 kann als Mehrfachkupplung ausgebildet werden, wobei wenigstens zwei Kupplungen übereinander oder/und nebeneinander in kompakter und insbesondere kurzer und montagefreundlicher Bauweise zusammengefaßt werden. Das Drucköl kann auf einfache Art zentral von einer Welle her zugeleitet werden.

Das Kupplungsprofil 76 nach Figur 3e ist erfindungsgemäß mit hohen Schaltzähnen 79 und niedrigen Schaltzähnen 77 ausgerüstet. Der Vorteil dieser Kupplungsverzahnung beruht darauf, daß sehr hohe Synchronlaufabweichungen überbrückt werden können, das heißt daß noch bei hohen Relativdrehzahlen zwischen den beiden Kupplungsringen 23 und 24 eine sichere Kupplungsschaltung möglich ist, was bei gleichhohen Schaltzähnen meist nicht mehr gewährleistet ist, da die axiale Kolbengeschwindigkeit nicht ausreicht, um die Schaltzähne in Eingriff zu bringen, es sei denn, es wird ein hohes Verdrehspiel SV vorgesehen, was zu den bekannten Nachteilen des Kupplungsverdrehspieles im Schub/Zug-Verhalten des Fahrzeugs führt. Die Kupplungsverzahnung 76 verbindet somit die Schaltvorteile eines großen Zahnspieles SV mit den Vorteilen einer spielfreien bzw. einer weitgehend spielfreien Schaltverzahnung. Das Zahnspiel SV kann bei dieser Kupplungsverzahnung absolut spielfrei ausgelegt werden. Gegenüber der Kupplungsverzahnung nach Fig. 7c, die ebenfalls hohes Verdrehspiel im Schaltvorgang gewährleistet, hat die Ausführung 76 den Vorteil, daß sofort nach dem Schaltvorgang Spielfreiheit gegeben ist und darüberhinaus das mehrere, in der Regel doppelt so viel Zähne in Eingriff gebracht werden können zugunsten niedriger spezifischer Belastungsverhältnisse bzw. kleinerer Zahnhöhe, kleinerer Schaltwege, niedriger Zahnhöhen u.a.. Zweckmäßigerweise ist bei der Kupplungsverzahnung 76 jeder zweite Zahn 77 um ein entsprechendes Maß S1 zurückgenommen, so daß bei hohem Synchronlauffehler im Schaltvorgang der hohe Zahn 79 nicht in die nächste Zahnlücke sondern in die übernächste Zahnlücke greifen kann, indem dieser über den Zahnkopf 78 des niedrigeren Zahnes 77 gleiten kann. Bei einem Kolbenweg bzw. Schaltweg entsprechend der Zahnrücknahme um das Maß S1 treffen die schrägen Mitnehmerflächen 72 der Schaltzähne 79 - je nach Auslegung - bereits aufeinander, so daß in diesem Zustand durch ausreichenden Schaltdruck bereits ein sicheres Einrasten möglich ist. Die tragende Zahnflanke 74 kann beliebig als abweisende oder nichtabweisende Mitnahmefläche ausgebildet werden, wobei bei einer abweisenden Mitnahmefläche ein höherer dauernder Schaltdruck und bei nichtabweisender Mitnahmefläche ein niedriger Dauerschaltdruck vorausgesetzt ist, um die Kupplung im geschlossenen Zustand zu halten.

Die Schaltverzahnung 76 kann bei allen bereits beschriebenen Kupplungsausführungen als Mitnahmeverzahnung Verwendung finden. Darüberhinaus erlaubt diese Kupplungsausführung auch die Anwendbarkeit externer Schaltbetätigungseinrichtungen, d.h. z.B. Schalteinrichtungen mittels einer Schaltgabel und einem externen Schaltzylinder anstelle der Druckkolben 81, 88. Hierbei ist jedoch zweckmäßigerweise die Schaltverzahnung mit einem nichtabweisenden Mitnahmeprofil 74 auszulegen. Die Mitnahmeflächen 74 können hierbei auch hintcrschnitten werden, das heißt mit einem negativen Winkel $\gamma$, um mögliche Axialschübe gegen die Schaltbetätigungseinrichtung auszuschließen. Auch die Schrägflächen 72 können entweder mit einem sehr kleinen Schrägungswinkel oder geraden, nicht-abweisenden , Mitnehmerflächen oder auch mit Mitnehmerflächen ausgebildet sein, die nach anfänglichen Einführungsfase 97 oder Einführungs-Rundungen 73 in Schaltrichtung ein Ineinanderziehen der Kupplungsverzahnung bewirken durch entsprechende, ansich bekannte negative Zahnflankenform.

Die verschiedenen Ausführungsformen der Kupplungsverzahnungen, insbesondere der Ausführungsformen, die keine abweisende Kraftkomponente im geschalteten Zustand aufweisen, sind auch vorteilhaft anwendbar bei Getrieben mit externen, nicht zentral zur Kupplungsachse angeordneten Druckkolben. Zum Beispiel ein zur Kupplungsachse versetzt angeordneter Schaltzylinder kann hier vorteilhaft in Verbindung mit einer Schaltgabel den Kupplungsring, gegebenenfalls für zwei Kupplungen, betätigen, wie bei Stufengetrieben oder auch stufenlosen Lastschaltgetrieben bereits bekannt.

Kennzeichen

a   Drehzahlsignal  Hydrostateinheit A
b   Drehzahlsignal  Hydrostateinheit B
c   Drehzahlsignal  Getriebeabtrieb
d   Verstellsignal Hydrostat
e   Synchronsignal
f   Bremssignal
g   Gaspedal-Wegsignal
h   Wählsignal
i   Signal für Übersetzungslimitierung
    oder Geschwindigkeitslimitierung
j
k   Motor-Regelsignal
l   Verstell-Regelsignal
m   Hydrostat-Drucksignal
n

SV  Verdrehweg  -spiel
S1  Zahnrücknahme
    Schrägfläche
$X;Y;Z$ Verstell-Korrektur
    Verstellwinkel
$T_{K1}$ Kupplungsmoment
$T_{K2}$ Kupplungsmoment
S   Schaltpunkt

1   Hydrostatgetriebe
2   Kupplungen
3   Hydrostat-Welle zu A
4   Abtriebswelle
5   Hydrostatwelle zu B
6   Steuergerät/Prozessor
7   Hochdruck/Niederdruckleitung
8   Hochdruck/Niederdruckleitung
9   Speisepumpe
10  Speisedruck
11  Steuerdruck K1
12  Steuerdruck K2
13  Steuerdruck K3
14  Verstellorgan
15  Verstelleinrichtung
16  Druckventil
17  Sperrventil
18  Verstellservo
19  Getriebeglied
20  Kupplungsträger

21  Kupplung 1
22  Kupplung 2
23  Kupplungsring
24  Kolben
25  Kolben
26  Kupplungsring
27  Kupplungsprofil
28  Feder
29  Feder
30  Mitnehmer
31  Synchronring
32  Mitnehmer
33  Anschlag
34  Synchronfläche
35  Schrägfläche
36  Schrägfläche
37  Ausnehmung
38  Feder
39  Mitnehmer
40  Synchronisiereinrich-
    tung

Kennzeichen

| | | | |
|---|---|---|---|
| 41 | Kupplungsring | 80 | Reibkupplung |
| 42 | Druckstück | 81 | Kolben/Kupplungskörper |
| 43 | Mitnehmer | 82 | Reibfläche |
| 44 | Wechselventil | 83 | Reibfläche |
| 45 | Hydrospeicher | 84 | Reiblfäche |
| 46 | Ventil | 85 | Reiblfäche |
| 47 | Stellungssignalgeber | 86 | Kupplungsring |
| 48 | | 87 | Kupplungsring |
| 49 | | 88 | Kolben |
| 50 | | 89 | Kupplung |
| 51 | Ventil | 90 | Kupplungsträger |
| 52 | Ventil | 91 | Druckplatte |
| 53 | Steuerdruck | 92 | Druckplatte |
| 54 | Steuerdruck | 93 | Mitnahmeflächen |
| 55 | Feder | 94 | Stirnflächen |
| 56 | Steuerdruck | 95 | |
| 57 | Steuerdruck | 96 | Mitnahmeprofil |
| 58 | | 97 | Anschrägung |
| 59 | | 98 | Reibfläche |
| 60 | Kupplungsträger | 99 | Feder |
| 61 | Kolben | 100 | Kupplung |
| 62 | Kolben | 101 | |
| 63 | Feder | 102 | |
| 64 | Feder | 103 | |
| 65 | Feder | | |
| 66 | Kupplungsring | | |
| 67 | Kupplungsglied | 400 | Kupplungsprofil |
| 68 | Druckplatte | 401 | Zahn |
| 69 | Kupplungsring | 402 | Einprägung |
| 70 | Kupplungsring | 403 | Zahnlücke |
| 71 | Kupplungsprofil (Fig.3a) | 404 | Mitnehmerfläche |
| 72 | Anschrägung | 405 | Mitnehmerfläche |
| 73 | Zahnrundung | 406 | Verhakung |
| 74 | Tragfläche/Mitnehmerfl. | 407 | Schlupfschräge/-Rundung |
| 75 | Entleerungsventil | 408 | Kupplungsring |
| 76 | Kupplungsprofil | | |
| 77 | Zahn niedrig | | |
| 78 | Zahnkopf | | |
| 79 | Zahn hoch | | |

**Patentansprüche**

1. Schalteinrichtung mit einer auf einem rotierenden oder nichtrotierenden Getriebeteil drehfest und achsfest angeordnetem Kupplungsträger , auf dem ein drehfester und axial verschiebbarer Kupplungsring gelagert ist, der durch einen mit einem Druckmittel beaufschlagbaren, auf dem Kupplungsträger gelagerten Kolben axial verschiebbar und mit einem entsprechenden Kupplungsring verbindbar ist, wobei die Kupplungsringe mit einem Mitnehmerprofil oder/und Reibflächen versehen sind,

**dadurch gekennzeichnet,** daß die Schalteinrichtung so ausgebildet ist, daß zwei voneinander unabhängig schaltbare Einzelkupplungen eine Schaltfunktionseinheit bilden und daß das Getriebeschalten bei Synchronlauf bzw. im Synchronlaufbereich der beiden Hälften der jeweils zu schließenden Einzelkupplung erfolgt, indem bei besagtem Synchronlauf ein Steuersignal zum Ineinandergreifen der beiden Hälften der Einzelkupplung ausgelöst wird und daß das Kupplungsprofil abweisende oder nichtabweisende Mitnehmerflächen (74) oder/und Mitnehmer (406) besitzt, denen abweisende Mitnehmerflächen (72; 405, 407) oder Rundungen (73) zugeordnet sind (Fig. 3a; ) oder/und daß die Kupplungsringe (81; 88) konische Reibflächen (82, 83; 84, 85) besitzen.

2. Schalteinrichtung für ein stufenloses hydrostatisch-mechanisches Verzweigungsgetriebe, das aus einer ersten Hydrostateinheit (A) und einer zweiten Hydrostateinheit (B) und wenigstens zwei Schaltbereichen besteht, bei dem die Hydrostateinheiten (A) und (E) bei jedem Bereichswechsel ihre Funktion als Pumpe oder Motor vertauschen, wobei die Bereichsschaltung bei Synchronlauf der zu schaltenden Kupplungsglieder erfolgt und eine Einrichtung für die Korrektur des lecköbedingten Drehzahlschlupfes der Hydrostatwelle (5) sorgt und der Bereichswechsel ohne Lastunterbrechung stattfindet

**dadurch gekennzeichnet,** daß eine Verstelleinrichtung vorgesehen ist, die eine von der Last oder/und anderen Betriebswerten abhängige Verstellweg-Korrektur (X; Y) innerhalb der Schaltphase ermöglicht, wobei gleichzeitig beide Kupplungen (K1 und K2), d.h. die alte und die neue Kupplung geschlossen sind und die alte Kupplung erst nach einer, innerhalb beider geschlossener Kupplungen (K1 und K2) erfolgten Änderung der Hydrostatverstellung im Bereich einer Verstellweg-Korrektur (Z bzw. X plus Y) öffnet und daß die Kupplungen (K1; K2) form- plus kraftschlüssige oder rein formschlüssige Kupplungen (Fig. 3; 3a; 3b; 3c; 4; 5) oder Reibkupplungen mit konischen Reibflächen sind, wobei zum Schließen der jeweiligen Kupplung ein auf einen Kupplungsträger (20; 60; 201) gelagerter mit Druckmittel beaufschlagbarer Kolben (24; 25; 61; 62; 81; 82) dient.

3. Schalteinrichtung für ein stufenloses Verzweigungsgetriebe mit mechanischen Verstelleinheiten, insbesondere in Form eines Umschlingungsgetriebes, das aus einer ersten Verstelleinheit (A) und einer zweiten Verstelleinheit (B) und wenigstens zwei Schaltbereichen besteht und der Bereichswechsel ohne Lastunterbrechung stattfindet und die Schaltung bei Synchronlauf der Kupplungsglieder erfolgt

**dadurch gekennzeichnet,** daß die alte Kupplung erst nach Schließen der neuen Kupplung öffnet und daß die Kupplungen (K1; K2) form- plus kraftschlüssige oder rein formschlüssige Kupplungen (Fig. 3; 3a; 3b; 3c; 4; 5) oder Reibkupplungen (Fig. 6) mit konischen Reibflächen sind, wobei zum Schließen der jeweiligen Kupplung ein auf einen Kupplungsträger (20; 60; 201) gelagerter mit Druckmittel beaufschlagbarer Kolben (24; 25; 61; 62; 81; 82) dient.

4. Schalteinrichtung für ein automatisch schaltbares Stufengetriebe mit einer gleichzeitig form- und kraftschlüssig wirkenden Kupplungseinrichtung oder einer rein kraftschlüssigen Kupplungseinrichtung oder einer rein formschlüssigen Kupplungseinrichtung mit einem auf einem Getriebeteil drehfest und achsfest angeordnetem Kupplungsträger, auf dem ein drehfester aber axial verschiebbarer Kupplungsring gelagert ist, der durch ein mit Druckmittel, vorzugsweise mit Öl beaufschlagbaren Kolben axial verschiebbar und mit einem entsprechenden Kupplungsring verschiebbar ist

**dadurch gekennzeichnet,** daß das Stufengetriebe ein ansich bekanntes Doppelkupplungsgetriebe ist, wobei zwei als Reibkupplung ausgebildete Trennkupplungen wechselweise mit dem Antriebsmotor koppelbar sind und die Schaltkupplung (21, Figur 4, 5 und 6) eine Synchronisiereinrichtung (40) besitzt oder daß die Kupplung (80) als Reibkupplung mit konischen Reibflächen ausgebildet ist und daß die neue Kupplung bei geschlossener alter Kupplung vorgewählt wird, wobei die Synchronisiereinrichtung (40) über den auf den Kupplungsträger (20) gelagerten Druckkolben (24) betätigt wird.

5. Schalteinrichtung für ein stufenloses verzweigungsgetriebe nach einem der Oberbegriffe der Ansprüche 1 bis 4

**dadurch gekennzeichnet,** daß der Schaltdruck zum Schließen der neuen Kupplung nach erreichtem Synchronzustand der Kupplungsglieder dieser Kupplung kurzzeitig angehoben wird oder/und daß eine Verstell-Sperreinrichtung vorgesehen ist, die nach erreichtem Synchronlauf die Verstelleinrichtung des stufenlosen Getriebes solange sperrt, bis die neue Kupplung geschlossen ist, oder/und daß der Synchronpunkt über die Steuer-Regeleinrichtung so lange aufrecht erhalten wird, bis die neue Kupplung geschlossen ist oder die Kupplungsverzahnung begonnen hat ineinanderzugreifen.

6. Schalteinrichtung nach Anspruch 1 bis 5
   **dadurch gekennzeichnet,** daß eine Rückstelleinrichtung (Feder 28; 29; 63; Druckkolben 215; Druckraum 219; 217) vorgesehen ist, deren Rückstellkraft so groß ist, daß die mit nichtabweisenden Mitnehmerflächen (72) ausgebildete Einzelkupplung auch unter Last nach Wegnahme des Schaltdruckkes öffnet.

7. Schalteinrichtung nach einem der Ansprüche 1 bis 6
   **dadurch gekennzeichnet,** daß einem Kupplungsprofil (71) mit nichtabweisenden Mitnehmerflächen (74) abweisende Mitnehmerflächen (72) zugeordnet sind und daß das Profil mit oder ohne weiteren in Umfangsrichtung geneigten Schrägflächen (97) versehen ist.

8. Schalteinrichtung nach einem der Ansprüche 1 bis 7
   **dadurch gekennzeichnet,** daß die kurzzeitige Anhebung des Schaltdruckes zum Schließen der neuen Kupplung durch ein entsprechendes Druckventil (16; 122) erzeugt wird und daß das Druckventil (16; 122) oder/und die Verstell-Sperreinrichtung (17; 44; 180) durch ein Synchronsignal (e) oder durch ein vom Synchronsignal abhängiges Signal (Schaltsignal 169; 170; 171; 172) ansteuerbar ist und daß die Verstell-Sperreinrichtung eine in der Elektronik eingespeicherte Einrichtung darstellt oder über hydraulische Ventile bzw. hydraulisch-mechanische Einrichtung in Form eines Sperrventils (17) oder/und Wechselventil (44) oder/und eines Hauptregelventiles (180) realisiert-wird.

9. Schalteinrichtung nach einem der Ansprüche 1 bis 8
   **dadurch gekennzeichnet,** daß die Verstell-Sperrzeit begrenzt wird durch ein Kupplungs-Schließsignal, das nach aufgebauten Steuerdruck der neuen Kupplung ausgelöst wird oder durch ein festeinprogrammiertes bzw. festgelegtes Zeitsignal oder durch eine durch eine Betriebsgröße beeinflußbare Zeitgröße begrenzt wird, wobei die Betriebsgröße, Betriebstemperatur, Hydrostatdruck, Verstellgeschwindigkeit, Drosselklappenstellung, Gaspedalstellung oder andere sein können.

10. Schalteinrichtung nach einem der Ansprüche 1 bis 9
    **dadurch gekennzeichnet,** daß ein Hydrospeicher (45) vorgesehen ist, der mit dem Druck der zweiten Druckstufe des Druckventiles (16 bzw. 122) bedarfsweise nach jedem Schaltvorgang aufgeladen wird und daß ein Ventil (46) nach erreichtem Synchronlauf über ein entsprechendes Signal, z.B. Synchronsignal (e) den Hydrospeicher (45) öffnet für einen raschen Schließvorgang der neuen Kupplung.

11. Schalteinrichtung nach einem der Ansprüche 1 bis 10
    **dadurch gekennzeichnet,** daß das lastabhängige Korrekturmaß (Z) vor Beginn der Schaltphase durch einen Arbeitsdruck ($\Delta p1$) bestimmt wird und nach geschlossener neuer Kupplung (K2) davon abhängig der Arbeitsdruck ($\Delta p2$) der anderen Druckseite (8) das Öffnungssignal für die alte Kupplung (K1) nach Erreichen des entsprechenden Differenzdruckes ($\Delta p2$) auslöst.

12. Schalteinrichtung nach einem der Ansprüche 1 bis 11
    **dadurch gekennzeichnet,** daß eine Schalt-Hysterese-Einrichtung vorgesehen ist, die aus einer oder mehreren Betriebsgrößen ($\Delta p1$ , $\Delta p2$ ; Drehzahldifferenz; Differenz einer Verstellgröße, Verstellwinkel $\alpha$ ) angesteuert oder/und durch eine festeinprogrammierte Zeitgröße limitiert wird.

13. Schalteinrichtung nach einem der Ansprüche 1 bis 12
    **dadurch gekennzeichnet,** daß der Druckkolben (61; 62; 214) und der Kupplungsring (70, 69) zwei voneinander getrennte Bauteile sind, die jeweils getrennt voneinander Federelemente (65, 63 bzw. 29; 64) besitzen und daß nach erfolgtem Öffnungssignal zuerst der Druckkolben (65; 62) über den Einfluß der Federkraft zurückgeführt wird und der Kupplungsring (70; 69) bei Ausbildung des Kupplungsprofils ohne axialer drehmomentabhängiger Kraftkomponente erst nach erfolgtem Drehmomentabfall über die Federelemente (29; 64) zurückgeführt wird. (Fig 3b)

14. Schalteinrichtung nach einem der Ansprüche 1 bis 13
    **dadurch gekennzeichnet,** daß die Kupplung (Fig. 3c) Druckkolben (214, 215) mit hydraulischer Rückführung über eine Rückstellkolbenfläche (217, 219) besitzt.

**15.** Schalteinrichtung nach einem der Ansprüche 1 bis 14
**dadurch gekennzeichnet,** daß eine Verstelleinrichtung (15) vorgesehen ist, die eine lastabhängige Verstellweg-Korrektur (X; Y) derart ermöglicht, daß mittels einer oder mehrerer Betriebsgrößen (Hydrostatdrucksignal p1; p2) die Hydrostatverstelleinrichtung um die entsprechende Verstellgröße (X; Y) korrigiert wird.

**16.** Schalteinrichtung nach einem der Ansprüche 1 bis 15
**dadurch gekennzeichnet,** daß das Öffnungssignal
- aus einem Drucksignal ($\Delta$p1; $\Delta$p2) einer oder mehrerer Arbeitsdruckleitungen (7; 8) des Hydrostatgetriebes (1) resultiert oder
- nach einer fest vorgegebenen Zeitgröße (z.B. 0,05 Sekunden) erfolgt oder
- nach einer variablen Zeitgröße in Abhängigkeit einer oder mehrerer Betriebsgrößen oder
- nach einer festgelegten Mindestzeitgröße oder
- daß für das Öffnungssignal eine maximale Zeitgröße (z.B. O,1 Sekunden) festgelegt ist, die durch eine Betriebsgröße ($\Delta$p1; $\Delta$p2) übersteuert wird oder
- bei Ausbildung der Kupplung als rein formschlüssige Kupplung mit einem Kupplungsprofil (400 gemäß Fig. 3d) ohne drehmomentabhängiger Axialkraftkomponente unmittelbar nach Schließen der Folgekupplung (K2) ausgelöst wird und die Kupplung nach ausreichendem Drehmomentabfall durch Federkraft oder hydraulischer Kraft öffnet.

**17.** Schalteinrichtung nach einem der Ansprüche 1 bis 16
**dadurch gekennzeichnet,** daß bei einer konstanten Übersetzungseinstellung (wie z.B. bei Arbeitsmaschinen erforderlich) im Schaltpunktbereich oder innerhalb längerer Verweildauer an diesem Übersetzungspunkt beide Kupplungen (alte und neue Kupplung z.B. K1 und K2) geschlossen sind, wobei das Verstellglied in seiner Verstellgröße Winkel $\alpha$ in Neutralstellung S gehalten wird oder je nach Lastzustand innerhalb des Korrekturbereiches (X, Y bzw. Z) variiert oder/und daß ein Bypaßventil (nicht dargestellt) zwischen den beiden Hochdruckleitungen (7 und 8) des Hydrostatgetriebes vorgesehen ist, das in diesem Schaltzustand geöffnet werden kann und vor Öffnen einer der beiden Kupplungen wieder schließt durch ein entsprechendes Schließsignal, das aus einer oder mehreren der Betriebsgrößen ($\Delta$p1 ; $\Delta$p2 ; $\Delta$p ; Gaspedal-Wegänderung usw.) resultiert.

**18.** Schalteinrichtung nach einem der Ansprüche 1 bis 17
**dadurch gekennzeichnet,** daß die Kupplung (80) als Reibkupplung mit konischen Reibflächen (82, 83; 84, 85) ausgebildet ist, wobei ein Kupplungskörper (81; 88) mit seiner konischen Reibfläche (82; 84) axial verschiebbar aber drehfest über Mitnehmer (39; 30) mit einem Kupplungskörper (90) verbunden ist und über ein Druckmittel axial gegen die konische Gegenreibfläche (83; 85) eines zu kuppelnden Kupplungsringes (86; 87) verschiebbar ist, wobei ein Kupplungsring (86; 86a) eine oder mehrere konische Reibflächen (83; 83a) besitzt und gegebenenfalls eine Reibfläche mit einer konischen Reibfläche (98) eines mit dem Kupplungsträger (90) bevorzugt fest verbundenen Gliedes (Druckplatte 91; 91a) zusammenwirkt (Fig. 6; 6a).

**19.** Schalteinrichtung nach einem der Oberbegriffe der Ansprüche 1 bis 4 und Anspruch 18
**dadurch gekennzeichnet,** daß einer Kupplung mit konischen Reibflächen ein Mitnahmeprofil (71) zugeordnet ist, das in die konischen Reibflächen (85, 84) eingebrocht ist, wobei die konischen Reibflächen zwischen den beiden Kupplungsringen (81, 86; 87, 88) oder/und dem Kupplungsring (86a)- und einem mit dem Kupplungsträger (90) vorzugsweise festverbundenen mit einer konischen Reibfläche (98) versehenen Kupplungsglied (91a) angebracht sind (Fig. 6, Fig. 3a) oder daß der Kupplungsring (23a) auf einer Seite mit einem Mitnahmeprofil (27) und auf der anderen Seite mit einer konischen Reibfläche (98) versehen ist.

**20.** Schalteinrichtung nach einem der Ansprüche 1 bis 19
**dadurch gekennzeichnet,** daß das Kupplungsprofil (400) so ausgebildet ist, daß die Kupplungsverzahnung (401) im Drehmomentzustand über eine Verhakungseinrichtung (406) so lange geschlossen bleibt, bis das Drehmoment auf Null abgefallen ist oder daß das Kupplungsprofil an seinen tragenden Mitnehmerflächen (74) einen negativen Schrägungswinkel ( ) aufweist, der drehmomentabhängig ein Ineinanderziehen der Mitnahmeverzahnung bewirkt. (Fig. 3d)

**21.** Schalteinrichtung nach einem der Ansprüche 1 bis 20

**dadurch gekennzeichnet,** daß die Steuereinrichtung über eine elektronische Steuerlogik oder/und einer hydraulisch-mechanischen Steuereinrichtung geregelt wird, wobei bei der zumindest teilweise hydraulisch-mechanischen Steuereinrichtung für die Kupplungssteuerung ein Ventil (52) über eine oder beide der Arbeitsdruckleitungen (7; 8) des Hydrostatgetriebes angesteuert wird. (Fig. 2b)

22. Schalteinrichtung nach einem der Ansprüche 1 bis 21
**dadurch gekennzeichnet,** daß ein Ventil (51) vorgesehen ist, das nach erfolgtem Schließen der neuen Kupplung (K2) ein bereits erteiltes Öffnungssignal (11a) für die bisher geschlossene Bereichskupplung (K1) durch den Einfluß eines Hydrostatdruckes ($\Delta p_1$) solange blockiert, bis dieser Hydrostatdruck auf $\Delta p_1 = 0$ oder auf eine ausreichend niedrige, vorzugsweise durch eine Steuereinrichtung (Feder 55) vorgegebene Druckgröße abgesunken ist, die einem für die Schaltqualität günstigen Ausschaltpunkt (SK1'bzw. SK1) entspricht (Figur 2a; 2b).

23. Schalteinrichtung nach einem der Ansprüche 1 bis 22
**dadurch gekennzeichnet,** daß die Kupplungseinrichtung mit einer Synchronisiereinrichtung (40) mit konischen Synchronisierflächen ausgebildet ist, wobei der Synchronring (31) in einem axial verschiebbaren, aber drehfesten Kupplungsglied (Kolben 24) gelagert ist und als Sperrsynchronisierung oder Normalsynchronisierung wirkt, wobei der Synchronring (31) in eine Axialrichtung fixiert und in die andere Axialrichtung federnd nachgiebig über Federelemente (38) gelagert ist und daß der Synchronring (31) Mitnehmer (32) besitzt, die in Ausnehmungen (37) eines Kupplungsgliedes (Kolben 24) eingreifen und daß die Mitnehmerflächen bzw. Schrägflächen (35 bzw. 36) unter einem Winkel ausgebildet sind, der so groß ist, daß eine Sperrfunktion bewirkt wird oder daß der Winkel kleiner ist, so daß die Sperrfunktion verhindert wird.

24. Schalteinrichtung nach einem der Ansprüche 1 bis 23
**dadurch gekennzeichnet,** daß der Synchronring (31) zumindest teilweise spanlos herstellbar ist, z.B. als Blechprägeteil, Sinterteil oder Schmiedeteil und/oder daß der Kolben oder Kupplungsring (24) mit spanlos herstellbaren Mitnehmerflächen (35) ausgebildet ist, oder/und daß das Kupplungsprofil (27; 71, 96) spanlos herstellbar ist.

25. Schalteinrichtung, insbesondere für automatisch schaltbare Kraftfahrzeuggetriebe mit Kupplungsringen (23, 24) die ein Kupplungsprofil (76) mit Schaltzähnen (77, 79) besitzen
**dadurch gekennzeichnet,** daß die Kupplungsringe (23, 24) gegeneinander gerichtete hohe Schaltzähne (79) und niedrige Schaltzähne (77) besitzen (Fig. 3e).

26. Schalteinrichtung nach Anspruch 25 und einem weiteren der Ansprüche 1 bis 24
**dadurch gekennzeichnet,** daß die Kupplung mit dem Kupplungsprofil (76) mit Druckmittel beaufschlagbarem Kolben (24; 25; Fig. 3) betätigbar ist, der zentral zur Kupplungswelle oder extern über Schaltgabel oder ähnliche Schaltelemente angeordnet ist (nicht dargestellt).

FIG.1

# FIG.1a

## FIG. 2

## FIG. 2a

FIG. 2 b

## FIG. 3

## FIG. 3a

## FIG. 3e

FIG. 3b

FIG. 3 c

203    202

223
229
204
205
213

214
150
216
217
241
151
215
218
219
201

FIG. 3d

400
408
402
401
406

404
$\gamma_a$
402
405
406

$SV$

403
407

FIG. 4

FIG. 5

27

**FIG.6**

**FIG.6a**

**FIG.6b**

## FIG.7

## FIG.7a

## FIG.7b

## FIG.7c